# EUROPÄISCHE PATENTSCHRIFT

(11) **EP 3 539 376 B1**
(45) Veröffentlichungstag und Bekanntmachung des Hinweises auf die Patenterteilung: **01.09.2021**
(21) Anmeldenummer: 19161949.3
(22) Anmeldetag: 11.03.2019
(51) Int. Cl.: A01M 7/00

(54) **VERTEILSYSTEM EINER LANDWIRTSCHAFTLICHEN FELDSPRITZE MIT EINER OPTIMIERTEN ANORDNUNG VON VERTEILDÜSEN UND VERFAHREN ZUR AUSBRINGUNG VON SPRITZFLÜSSIGKEITEN**
DISTRIBUTION SYSTEM OF AN AGRICULTURAL FIELD SPRAYER WITH AN OPTIMISED ARRANGEMENT OF DISTRIBUTION NOZZLES AND METHOD FOR THE APPLICATION OF SPRAYED LIQUIDS
SYSTÈME DE DISTRIBUTION D'UN PULVÉRISATEUR AGRICOLE DOTÉ D'UN AGENCEMENT OPTIMISÉ DE BUSES DE DISTRIBUTION ET PROCÉDÉ D'ÉPANDAGE DE FLUIDES DE PULVÉRISATION

(30) Priorität: 12.03.2018 DE 102018105631
(43) Veröffentlichungstag der Anmeldung: 18.09.2019
(73) Patentinhaber: HORSCH LEEB Application Systems GmbH, 94405 Landau an der Isar (DE)
(72) Erfinder: Leeb, Theodor, 94562 Oberpöring (DE)
(74) Vertreter: v. Bezold & Partner Patentanwälte - PartG mbB

(56) Entgegenhaltungen:
- EP-A1- 0 463 007
- EP-A1- 2 227 949
- DE-T2- 69 817 421
- US-A1- 2016 175 869
- US-B2- 8 191 795

## Beschreibung

Die vorliegende Erfindung betrifft ein Verteilsystem einer landwirtschaftlichen Feldspritze mit einer optimierten bzw. verbesserten Anordnung von Verteildüsen mit den Merkmalen des unabhängigen Anspruch 1. Die Erfindung betrifft zudem ein Verfahren zur Ausbringung von Spritzflüssigkeiten mit den Merkmalen des Verfahrensanspruchs 20.

Zur Verteilung von flüssigen und/oder festen landwirtschaftlichen Pflanzenschutzmitteln bzw. Spritzflüssigkeiten werden Feldspritzen eingesetzt, siehe z.B. US2010032492. Wobei derartigen Feldspritzen zur möglichst exakten Verteilung der jeweiligen Spritzflüssigkeiten jeweils ein Verteilsystem zugeordnet ist. Die Verteilung der Spritzflüssigkeit über einem Pflanzenbestand bzw. über einer Ackerfläche erfolgt jeweils mittels verschiedenster Ausbringdüsen bzw. Spritzdüsen und/oder Verteildüsen. Wobei diese Ausbringdüsen in der Regel an einem sog. Düsenstock angebaut sind, welchem Düsenstock zudem eine, zwei oder mehr Ausbringdüsen zugeordnet sein können, welche Ausbringdüsen zudem verschiedene Eigenschaften aufweisen, d.h. bspw. verschiedene Tropfenspektren erzeugen, können.

Um mit einer Ausbringdüse, bei konstantem Druck und gleich bleibenden Tropfenspektrum, verschiedene Ausbringmengen an Spritzflüssigkeit zu erreichen sind zudem Systeme bzw. Spritzdüsen und/oder Verteildüsen bekannt, welche mit einer Pulsweitenmodulation angesteuert werden. Dazu wird jeder Spritzdüse und/oder Verteildüse ein Ventil zugeordnet welches bspw. in einer Frequenz von 10 Hz (Hertz) geschaltet wird. Dies bedeutet, dass die Düse 10-mal pro Sekunde geöffnet und geschlossen wird. Zudem weisen die Ventile jeweils einen veränderbaren Tastgrad von bspw. 80% auf. Anhand der Frequenz und des Tastgrad kann somit jeweils die Durchflussmenge an Spritzflüssigkeit durch die Spritzdüse und/oder Verteildüse variiert werden. Um dies noch weiter zu verbessern sind zudem Systeme bekannt bei welchem die Frequenz noch weiter erhöht wurde und bspw. 25 Hz oder 50 Hz beträgt.

Ein derartiges System bzw. eine derartige Steuerung von Spritzdüsen mittels Pulsweitenmodulation wurde bspw. durch die Düsensteuerung "DynaJet Flex 7120" des Unternehmens "TeeJet Technologies" bereits bekannt. Durch ein schnelles Öffnen und Schließen, d.h. durch eine entsprechend hohe Frequenz sowie durch eine Anpassung des jeweiligen Tastgrad, d.h. durch eine Anpassung der jeweiligen Öffnungszeiten lassen sich somit große Spannen bei der Anpassung der Ausbringmenge mit der gleichen Spritzdüse bzw. Verteildüse realisieren.

Nachteilig an dem aus dem Stand der Technik bekannt gewordenen System ist jedoch, dass bei diesen jeder Spritzdüse oder jeder Verteildüse jeweils ein Ventil zur Erzeugung der Pulsfrequenz bzw. zur Erzeugung der Pulsweitenmodulation zugeordnet werden muss. So werden bspw. bei einem Abstand der Spritzdüsen zueinander von 25cm und einer Arbeitsbreite der Feldspritze von bspw. 30 Meter bis zu 120 Spritzdüsen mit jeweils einem separaten Ventil benötigt.

Insofern mittels der Feldspritze die Möglichkeit gegeben sein soll noch weitere Ausbringmuster und Tropfenspektren erzeugen zu können, können zudem bspw. an einem Düsenstock zwei oder vier oder mehr Spritzdüsen oder Verteildüsen angebracht sein, welchen Spritzdüsen oder Verteildüsen wiederum jeweils ein Ventil zur Pulsweitenmodulation zugeordnet sein kann. Durch eine derartige Ausführung können an der Feldspritze mehrere hundert Ventile angebracht sein, welche Ventile an sich teuer sind und zudem kostenintensive Steuerungen und Verdrahtungen oder dergl. benötigen. So sind hierbei durchaus Kosten in Höhe von bis zu 900,-€ je Meter Arbeitsbreite möglich, so dass sich der Einsatz von derartigen Ventilen zur Pulsweitenmodulation durch die Einsparung an Pflanzenschutzmittel alleine nicht amortisiert.

Auch können die Ventile, insbesondere wenn diese mit dem jeweiligen Pflanzenschutzmittel bzw. mit der jeweiligen Spritzflüssigkeit in Kontakt kommen beschädigt werden. Wodurch wiederum das Arbeitsergebnis der Spritzdüsen oder Verteildüsen negativ beeinflusst werden kann.

Ziel der vorliegenden Erfindung ist es somit, ein Verteilsystem für eine landwirtschaftliche Feldspritze zur Ausbringung von Spritzflüssigkeit zur Verfügung zu stellen, bei welchem die durch eine Pulsweitenmodulation bei einer Ausbringung von Pflanzenschutzmittel hervorgerufenen Vorteile vorhanden sind, dies jedoch mit einer auf ein Minimum reduzierten Anzahl an Schaltelementen zur Erzeugung einer Pulsweitenmodulation zu erreichen, ohne hierbei die Verteilqualität negativ zu beeinflussen.

Diese Aufgaben werden gelöst durch ein Verteilsystem einer landwirtschaftlichen Feldspritze mit einer optimierten bzw. verbesserten Anordnung von Verteildüsen mit den Merkmalen des unabhängigen Anspruch 1, sowie durch ein Verfahren zur Ausbringung von Spritzflüssigkeiten mit den Merkmalen des unabhängigen Anspruch 21. Vorteilhafte Weiterbildungen sind in den abhängigen Ansprüchen und der Beschreibung angegeben.

Zur Lösung der vorgenannten Aufgaben schlägt die Erfindung ein Verteilsystem vor, welches Verteilsystem insbesondere an einer landwirtschaftlichen Verteilmaschine bzw. Feldspritze Verwendung findet. Die Feldspritze umfasst zumindest einen Vorratsbehälter zur Bereitstellung der jeweiligen Spritzflüssigkeit, wobei die Spritzflüssigkeit mittels einer Pumpe mit variabel veränderbaren Druck und/oder mittels auf einen zumindest weitgehend konstanten Wert geregelten Druck vom Vorratsbehälter entlang einer, an einem an der Feldspritze angebauten Spritzgestänge geführten, Flüssigkeitsleitung gefördert wird. Wodurch jeweils zueinander beabstandet am Spritzgestänge angebrachte Spritzdüsen und/oder Verteildüsen mit Spritzflüssigkeit versorgt werden.

Um ein Verteilsystem für eine landwirtschaftliche Feldspritze zur Ausbringung von Spritzflüssigkeit zur Verfügung zu stellen bei welchem die durch eine Pulsweitenmodulation bei einer Ausbringung von Pflanzenschutzmittel hervorgerufenen Vorteile vorhanden sind, dies jedoch mit einer auf ein Minimum reduzierten Anzahl an Schaltelementen zur Erzeugung einer Pulsweitenmodulation zu erreichen ohne hierbei die Verteilqualität negativ zu beeinflussen, ist vorgesehen, dass benachbart zu zumindest einer Spritzdüse eine Verteildüse angebracht ist, wobei die Verteildüse mit einem, mit Pulsweitenmodulation betätigten Schaltelement angesteuert wird, wobei die Pulsweitenmodulation der Verteildüse in Abhängigkeit der Durchflussmenge der Spritzdüse variiert wird. Durch eine derartige optimierte Anordnung von Spritzdüsen und Verteildüsen kann jeweils erreicht werden, dass die Ausbringmenge der durch eine Pulsweitenmodulation angesteuerten Verteildüse zumindest annähernd gleich zu der, nicht mit einer Pulsweitenmodulation angesteuerten Spritzdüse ist.

Es sei vorab darauf hingewiesen, dass es sich im nachfolgenden bei Verteildüsen jeweils um derartige Ausbringdüsen handelt, welche mit einem, mit Pulsweitenmodulation betätigten Schaltelement angesteuert werden, bei den Spritzdüsen hingegen um derartige Ausbringdüsen handelt die nicht unmittelbar mit einem, mit Pulsweitenmodulation betätigten Schaltelement angesteuert werden.

Es sei zudem darauf hingewiesen, dass es sich unter einer Pulsweitenmodulation bzw. einem mit einer veränderbaren Pulsweitenmodulation ansteuerbarem Schaltelement insbesondere um derartige Schaltelemente handelt, welche mittels einer Pulsweitenmodulation (PWM) bzw. einer Pulsdauermodulation bzw. einer Pulslängenmodulation, bzw. einem Unterschwingungsverfahren oder einer Pulsbreitenmodulation ansteuerbar sind. Wobei all diese Ansteuerungsarten im Nachfolgenden unter dem Begriff der Pulsweitenmodulation bzw. PWM zusammengefasst werden.

Insbesondere kann es sich beim Pulsweitenmodulierten Schaltelement um ein Ventil wie bspw. ein Elektromagnetventil handeln. Auch kann das Schaltelement ein motorisch angetriebenes Element sein, bspw. ein Schrittmotor oder dergl. motorisches Element. Auch wären diverse Aktoren als Schaltelement wie bspw. Zylinder denkbar. Das Schaltelement ist jeweils derartig ausgeführt, dass mittels diesem die jeweilige Flüssigkeitsförderung bzw. der jeweilige Volumenstrom in definierten bzw. definierbaren Pulsweiten erfolgen kann. Hierfür ist das Schaltelement jeweils mittels einer Steuerungs- und/oder Regelungseinrichtung entsprechend ansteuerbar.

Das Schaltelement kann mit einer festen oder variablen veränderbaren Frequenz mittels einer Steuerungs- und/oder Regelungseinrichtung angesteuert werden. Wobei die Frequenz hierbei größer oder gleich 10 Hz oder 50Hz oder 200 Hz sein kann. Auch kann die Frequenz ein in der Steuerungs- und/oder Regelungseinrichtung hinterlegter Optimierungsparameter sein, welcher Optimierungsparameter in Abhängigkeit der jeweiligen Komponenten des Verteilsystems festgelegt sein kann. Insbesondere kann vorgesehen sein, dass die Frequenz in Abhängigkeit der jeweiligen Verteildüsen und der zu dieser benachbarten in einem Abstand angeordneten zumindest einen Spritzdüse erhöht oder verringert wird.

Die Pulsweitenmodulation wird zudem durch einen Tastgrad definiert. Wobei dieser Tastgrad durch ein Verhältnis zwischen der Impulsdauer t (Zeitdauer) und der Periodendauer T (Schwingungsdauer) bestimmt wird. Die Impulsdauer t kann in diesem Zusammenhang auch als Ein-Zeit bezeichnet werden, d.h. als die Zeit in der das Schaltelement jeweils eingeschalten ist, bzw. die Zeit in der sich das Schaltelement in der geöffneten Stellung befindet.

Die Angabe des Tastgrad erfolgt zudem als Prozentwert %. Der Tastgrad ist somit definiert durch t / T. Dies bedeutet, ist das Verhältnis t = 0 ist das Schaltelement permanent vollständig geschlossen. Wohingegen bei einem Verhältnis von t = T das Schaltelement permanent vollständig geöffnet ist.

Erfindungsgemäß kann vorgesehen sein, dass gilt 0 < t / T < 1 wodurch das Schaltelement intermittierend geöffnet und geschlossen wird. Wobei die Ausbringmenge an Spritzflüssigkeit durch Variation des Tastgrad, d.h. durch Variation des Verhält t / T verringert oder vergrößert werden kann.

Zur Variation der Ausbringmenge bzw. zur Variation der Pulsweitenmodulation könnte mittels der das Schaltelement ansteuernden Pulsweitenmodulation sowohl die Impulsdauer t als auch die Periodendauer T bzw. somit der Tastgrad variiert werden, wobei dies jeweils mittels eines in einer Regelungs- und/oder Steuerungseinrichtung hinterlegten Regelungsprogramms erfolgen kann. Ebenso kann eine Variation des Tastgrad bzw. der Pulsweitenmodulation manuell durch eine Bedienperson erfolgen. Es gilt somit, dass eine Variation der Pulsweitenmodulation bzw. der Parameter des Verteilsystems mittels eines Regelungssystems und/oder Steuerungssystems automatisiert erfolgen kann, aber auch manuell durch Veränderung durch eine Bedienperson erfolgen kann.

Beträgt z.B. der Tastgrad 80% und die Frequenz 1 Hz, so bedeutet dies, dass bezogen auf die Frequenz von 1Hz, d.h. 1s, dass Schaltelement theoretisch 0,8s geöffnet ist und 0,2s geschlossen ist. Da jedoch Schaltelemente bzw. die den Schaltelementen zugeordneten Verteildüsen in der Regel eine Eigenträgheit aufweisen werden diese aufgrund der hohen Frequenzen in der Regel nicht komplett geschlossen, sondern jeweils in Abhängigkeit der Frequenz und des Tastgrad nur auf eine, sich zwischen der geschlossenen und geöffneten Position einstellende Zwischenstellung. Bezogen auf den Durchfluss an Spritzflüssigkeit bedeutet dies, dass sich somit ein Mittelwert zwischen der geöffneten Stellung des Schaltelement und der geschlossenen Stellung des Schaltelements einstellt. So das auch die Ausbringmenge an Spritzflüssigkeit sich auf diesen Zwischenwert bzw. Mittelwert einstellt, was wiederum bedeutet, dass die Durchflussmenge bzw. die Ausbringmenge an Spritzflüssigkeit generell, gegenüber einem geöffneten Schaltelement reduziert wird.

In Abhängigkeit des jeweiligen Tastgrad und/oder der Frequenz kann somit die Ausbringmenge erhöht oder verringert oder zumindest weitgehend konstant gehalten werden, wobei hierbei in der Regel gilt, desto größer der Tastgrad desto größer die Ausbringmenge.

Zudem gilt desto kleiner die Frequenz desto größer die Zeit zur Schließung des Schaltelement, bzw. desto größer die Frequenz desto kleiner die Zeit zur Schließung des Schaltelement und desto größer der sich einstellende Mittelwert und desto größer wiederum die Ausbringmenge.

Mittels der Pulsweitenmodulation wird somit das Schaltelement jeweils mittels eines Rechtecksignal angesteuert, welches Rechtecksignal durch die Eigenträgheit des Schaltelements, insbesondere an dessen Schließmechanismus bzw. Öffnungsmechanismus eine Sinus ähnliche Schwingung und/oder ein Dreiecksignal und/oder ein Sägezahnsignal hervorruft. Wobei die Art des Signal jeweils vom der Eigenträgheit des Schaltelement und der Frequenz abhängig sein kann.

Bei der Feldspritze zur Ausbringung von Spritzflüssigkeit kann es sich sowohl um eine als selbstfahrend ausgebildete Feldspritze als auch als mittels eines Zugfahrzeuges gezogene Feldspritze handeln. Auch kann es sich bei der Feldspritze um eine an einem Zug- und/oder Transportfahrzeug insbesondere Traktor angebaute Feldspritze handeln. Auch könnte die Feldspritze als autonomes Fahrzeug ausgeführt sein.

Mittels erfindungsgemäßer Feldspritzen, bzw. mittels Feldspritzen an welchen jeweils das erfindungsgemäße Verteilsystem angebracht ist, werden Pflanzenschutzmittel bzw. Spritzmittel über einer landwirtschaftlichen Ackerfläche verteilt. Wobei das Pflanzenschutzmittel insbesondere eine mit einer Trägerflüssigkeit (vorzugsweise Wasser) vermischte Flüssigkeit sein kann und/oder wobei das Pflanzenschutzmittel ein in einer Trägerflüssigkeit gelöstest Granulat sein kann. Wobei die somit erzeugten Gemische als Spritzflüssigkeit bezeichnet werden können. Auch können verschiedene Granulate und/oder Flüssigkeiten mit einer Trägerflüssigkeit vermischt werden und wiederum eine Spritzflüssigkeit bilden. Als Pflanzenschutzmittel finden bspw. Pestizide, Herbizide, Fungizide, Insektizide oder dergl. Stoffe bzw. Mittel Verwendung. Auch können als Pflanzenschutzmittel verschiedenste Düngemittel eingesetzt werden.

Zum mitführen und bereitstellen der jeweiligen Pflanzenschutzmittel bzw. der jeweiligen Spritzflüssigkeiten ist der Feldspritze zugeordnet oder mit dieser wirkverbunden ein Vorratsbehälter, bzw. umfasst das Verteilsystem einen entsprechenden Vorratsbehälter zum mitführen und bereitstellen der jeweiligen Spritzflüssigkeit. Auch können zwei oder mehr Vorratsbehälter vorgesehen sein mittels derer verschiedene Pflanzenschutzmittel bzw. Spritzflüssigkeiten mitgeführt werden können, welche Vorratsbehälter zudem unterschiedliche Volumen aufweisen können.

Der Feldspritze ist, vorzugsweise in deren hinterem Bereich, ein Spritzgestänge zugeordnet. Welches Spritzgestänge zudem mittels Stellglieder oder Linearelementen in dessen Höhe in Bezug auf einen Pflanzenbestand bzw. auf einen die Komponenten der Feldspritze tragenden Rahmen verändert werden kann. Das Spritzgestänge erstreckt sich in einer Arbeitsposition mit einer großen Arbeitsbreite von bspw. 12 Meter; 18 Meter, 30 Meter oder mehr quer zu einer Fahrtrichtung der Feldspritze, wobei sich das Spritzgestänge zudem aus zwei, drei oder mehr Segmenten zusammensetzen kann. Welche Segmente zudem um aufrechte Achsen zueinander verschwenkt werden können. Zudem kann das Spritzgestänge bzw. dessen Segmente um aufrechte Achsen zueinander derartig verschwenkt werden, dass eine für eine Straßenfahrt gesetzlich geforderte Transportbreite von bspw. 3 Meter nicht überschritten wird.

Die Spritzflüssigkeit wird zudem jeweils mit veränderbarem und/oder auf einen konstanten Wert geregeltem Druck mittels einer Pumpe entlang der Flüssigkeitsleitung gefördert. Wobei der Flüssigkeitsleitung sowie dem Flüssigkeitskreislauf zudem, zur Veränderung der Ausbringmenge zumindest ein Regelventil zur Variation der Durchflussmenge an Spritzflüssigkeit durch die Flüssigkeitsleitung zugeordnet ist. Das Regelventil kann bspw. ein Durchgangsventil oder ein Volumenstromregler oder dergl. Ventil zur Regelung der Durchflussmenge an Spritzflüssigkeit sein. Der Druck in der Flüssigkeitsleitung kann jeweils mittels der Pumpe oder mittels anderer geeigneter Mittel geregelt bzw. variiert werden.

Die Pumpe kann bspw. eine Kreiselpumpe oder eine Kolbenmembranpumpe oder dergl. Pumpe sein. Die Pumpe kann zudem hydraulisch und/oder elektrisch und/oder pneumatisch angetrieben sein. Zudem kann die Pumpe bspw. mittels eines diesem zugeordneten Proportionalventil die jeweils benötigte Menge an Spritzflüssigkeit auf einen definierten Wert regeln. Auch kann die Pumpe mittels einer Regelungs- und/oder Steuerungseinrichtung entsprechend angesteuert werden und einen definierten bzw. einen variabel definierbaren Druck in der Flüssigkeitsleitung bzw. im Verteilsystem erzeugen. Wobei diese Ansteuerung bzw. Regelung automatisiert oder durch Vorgabe durch eine Bedienperson erfolgen kann.

Wobei insbesondere vorgesehen sein kann, dass der jeweilige Druck in Abhängigkeit der verwendeten Spritzdüsen und/oder Verteildüsen und der jeweiligen Pulsweitenmodulation konstant bleibt, d.h. dass dieser jeweils auf einen konstanten Druck in der Flüssigkeitsleitung bzw. im Verteilsystem geregelt wird.

Der Druck in der Flüssigkeitsleitung kann bspw. mittels der Pumpe geregelt werden und größer gleich 0,5bar und kleiner gleich 20 bar sein insbesondere jedoch kleiner oder gleich 10 bar. Vorzugsweise beträgt dieses Druckniveau jedoch zwischen 0,5 bar und 3 bar insbesondere jedoch 0,5 bar bis 1 bar. Vorzugsweise ist dieses Druckniveau zudem sowohl bei den Verteildüsen als auch bei den Spritzdüsen jeweils zumindest annähernd gleich.

Zudem können zur Überwachung des jeweiligen Druck in der Flüssigkeitsleitung bzw. im Verteilsystem auch entsprechende Sensoren bzw. Überwachungsmittel vorhanden sein. Als Überwachungsmittel können bspw. Drucksensoren verwendet werden. Insbesondere kann dieser Druck als Regelgröße für ein in der Regelungseinrichtung hinterlegtes Regelungsprogramm dienen.

Zur Verteilung der Spritzflüssigkeit sind am Spritzgestänge zueinander beabstandet eine Mehrzahl von Verteildüsen und Spritzdüsen angeordnet. Erfindungsgemäß ist insbesondere eine paarweise Anordnung einer Verteildüse und einer Spritzdüse vorgesehen. So das jeweils neben einer Verteildüse eine benachbart zu dieser angeordnete Spritzdüse vorgesehen ist. Zudem ist erfindungsgemäß jeweils vorgesehen, dass mittels der benachbarten Verteildüsen und Spritzdüsen jeweils eine gemeinsame bzw. zeitgleiche Ausbringung von Spritzflüssigkeit erfolgt. Wobei die Verteildüsen und die Spritzdüsen jeweils fluidisch verbunden und/oder fluidisch wirkverbunden sind. Die fluidische Verbindung bedeutet in diesem Zusammenhang bspw., dass die Verteildüse und die Spritzdüse die gleiche Versorgungsquelle aufweisen können.

Mit den Verteildüsen und den Spritzdüsen wird jeweils eine Zerstäubung der Spritzflüssigkeit durchgeführt. Mittels der Verteildüsen und der Spritzdüsen wird somit jeweils ein, Tropfenspektrum erzeugt, auf Basis welches Tropfenspektrum die zu behandelnde Ackerfläche bzw. dessen Pflanzen entsprechend mit Spritzflüssigkeit bedeckt und benetzt werden.

In einer Weiterbildung der Erfindung kann vorgesehen sein, dass die Verteildüsen und/oder die Spritzdüsen an sog. Düsenstöcken angebaut sind. Welche Düsenstöcke wiederum zueinander beabstandet am Spritzgestänge angebracht sind. Bei den Düsenstöcken kann es sich um Einfach-, Zweifach- oder Mehrfachdüsenstöcke handeln, d.h. an den Düsenstöcken kann eine oder können zwei oder mehr Verteildüsen und/oder Spritzdüsen angebracht sein. Bei einem Zweifach- oder Mehrfachdüsenstock können zudem Verteildüsen und/oder Spritzdüsen angebracht sein welche verschiedene Eigenschaften aufweisen, d.h. welche insbesondere verschiedene Tropfenspektren erzeugen. Wobei auch hierbei vorgesehen sein kann, dass jeweils nur mittels einer von den an einem Zweifach- oder Mehrfachdüsenstock angebrachten Verteildüsen und/oder Spritzdüsen eine Verteilung von Spritzflüssigkeit erfolgt, wobei die Verteildüsen und/oder Spritzdüsen hierfür bspw. automatisiert mittels bspw. eines Ventils oder manuell durch eine Bedienperson zu- oder abgeschaltet werden können. Wobei auch hierbei wiederum vorgesehen sein kann, dass jeweils eine an einem Düsenstock angebrachte Verteildüse und eine an einem beabstandet zu diesem Düsenstock an einem weiteren Düsenstock angebrachte Spritzdüse gemeinsam geschalten werden. Wobei diese Anordnung zudem an einem Spritzgestänge mehrfach wiederholt werden kann.

Als Verteildüsen und/oder Spritzdüsen können bspw. Injektordüsen und/oder Bandspritzdüsen, und/oder Flachstrahldüsen und/oder Doppelflachstrahldüsen und/oder Hochdruckdüsen und/oder dergl. Spritzdüsen verwendet werden. Auch können an zumindest einen Teil der Spritzdüsen wiederum jeweils sog. Schleppschläuche angebaut werden.

Die Verteildüsen und/oder die Spritzdüsen bzw. die Düsenstöcke können in einem Mindestabstand zueinander von 10cm angebracht sein. Insbesondere sind die Verteildüsen und/oder die Spritzdüsen bzw. die Düsenstöcke in einem Abstand von 25cm und/oder 50cm und/oder 100cm zueinander angebracht. Auch andere Abstände wären hierbei möglich. Wobei sich die Abstände bei einem Mehrfachdüsenstock jeweils auf deren Mittelpunkt beziehen können. Wobei sich diese Abstände insbesondere auf eine Ausrichtung quer zur Fahrrichtung beziehen können bzw. auf eine Erstreckungsrichtung des Spritzgestänge.

Auch können Düsenstöcke jeweils rotierend ausgebildet sein, so dass diese jeweils auf den gewünschten exakten Abstand rotiert werden können und sich der Abstand somit wiederum auf die Position der Verteildüsen und/oder der Spritzdüse bezieht.

Zudem wäre es denkbar das die Verteildüse und die zumindest eine Spritzdüse in Fahrrichtung betrachtet hintereinander angeordnet sein können. Wobei auch bei einer derartigen Ausführungsvariante diese einen Mindestabstand zueinander von 10cm aufweisen können.

Die Ausbringmenge der Verteildüsen und/oder Spritzdüsen kann u. a. auf Basis von deren Querschnittsfläche bzw. auf Basis von deren Durchlassöffnung definiert werden. Zudem kann die Ausbringmenge der Verteildüse auf Basis der jeweiligen Pulsweitenmodulation definiert werden.

Die Erfindungsgemäße verbesserte Anordnung von Verteildüsen und Spritzdüsen sieht insbesondere vor, dass die Querschnittsfläche der benachbart zur mittels Pulsweitenmodulation angesteuerten Verteildüse angeordneten Spritzdüse eine derartige Größe aufweist bzw. derartig definiert ist, dass mittels dieser die zumindest annähernd gleiche Menge an Spritzflüssigkeit als mit der Verteildüse ausgebracht wird. Um eine möglichst gleiche Ausbringmenge mittels der Verteildüse und der Spritzdüse zu erreichen sieht die Erfindung demnach vor, dass die Pulsweitenmodulation des Schaltelement der Verteildüse, insbesondere jedoch der Tastgrad der Pulsweitenmodulation in Abhängigkeit der Durchflussmenge an Spritzflüssigkeit durch die Spritzdüse variiert wird. Wobei hierbei gelten kann, je größer die Querschnittsfläche der Spritzdüse, desto größer dessen Durchflussmenge und desto größer der Tastgrad des Schaltelement der Verteildüse.

Anhand der Querschnittsfläche der Verteildüsen und der Spritzdüsen, anhand der durch die Flüssigkeitsleitung geförderten Menge an Spritzflüssigkeit sowie der bei den Verteildüsen angewandten Pulsweitenmodulation kann somit jeweils die Ausbringmenge an Spritzflüssigkeit definiert werden.

In einer Ausführungsvariante könnte demnach vorgesehen sein, dass bspw. die Verteildüse eine Querschnittsfläche D1 von ø 0,6mm² aufweist. Zudem könnte das der Verteildüse zugeordnete Schaltelement bspw. mit einer Pulsweitenmodulation mit 1 Hz und einem Tastgrad von 50% angesteuert werden. Darüber hinaus wird die Spritzflüssigkeit bspw. mit einem weitgehend konstanten Druck von 1 bar entlang der Flüssigkeitsleitung gefördert. Um mit einer Mindestanzahl an Verteildüsen eine möglichst geringe Menge an benötigter Pflanzenschutzflüssigkeit zu erreichen, ist in einer derartigen Ausführungsvariante vorgesehen, dass die Querschnittsfläche D2 der insbesondere benachbart zur Verteildüse angeordneten Spritzdüse ø 0,3mm² beträgt. Somit wird erreicht das aufgrund des Tastgrad von 50% und der Querschnittsfläche D1 von ø 0,6mm² mit der Verteildüse die zumindest annähernd gleiche Menge an Pflanzenschutzflüssigkeit ausgebracht wird als mit der eine Querschnittsfläche D2 von ø 0,3mm² aufweisenden Spritzdüse. Wodurch die erforderliche Menge an Spritzflüssigkeit sowie die Anzahl an benötigten Schaltelementen zur Erzeugung einer Pulsweitenmodulation jeweils auf ein Minimum reduziert werden.

In einer Weiterbildung der Erfindung kann zudem vorgesehen sein, dass bspw. die Verteildüsen und insbesondere die Spritzdüsen mit einer Blende ausgeführt sind mittels derer die Querschnittsfläche verändert werden kann, dies bedeutet, dass die Spritzdüse eine veränderbare Querschnittsfläche D2 aufweist und/oder dass die Verteildüse eine veränderbare Querschnittsfläche D1 aufweist. In einer derartigen Ausführungsvariante könnte zudem vorgesehen sein, dass die Querschnittsfläche D2 der Spritzdüse auf Basis der Pulsweitenmodulation und der Querschnittsfläche D1 der Verteildüse vergrößert oder verkleinert wird.

Vorzugsweise ist die Querschnittsfläche D1 der Verteildüse größer oder gleich als die Querschnittsfläche D2 der Spritzdüse.

Zur Versorgung der Düsenstöcke bzw. der Spritzdüsen und der Verteildüsen mit Spritzflüssigkeit sind diese mit zumindest einer, die Spritzflüssigkeit führenden Flüssigkeitsleitung verbunden. Die Flüssigkeitsleitung ist zudem mit dem Vorratsbehälter verbunden.

In einer Weiterbildung kann die Flüssigkeitsleitung zusammen mit dem Vorratsbehälter und der Pumpe einen Flüssigkeitskreislauf bilden, so dass mittels der Flüssigkeitsleitung die Spritzflüssigkeit vom Vorratsbehälter aus mittels der Pumpe zum Spritzgestänge bzw. zu den dem Spritzgestänge zugeordneten Spritzdüsen und/oder Verteildüsen bzw. zu den Düsenstöcken gefördert wird und anschließend die Flüssigkeitsleitung wiederum in den Vorratsbehälter mündet. Dies hat den Vorteil, dass allen Spritzdüsen und Verteildüsen bzw. allen Düsenstöcken jeweils genügend Spritzflüssigkeit zur Verfügung gestellt wird, welche Spritzflüssigkeit anschließend durch Öffnung der Spritzdüsen und/oder Verteildüsen bzw. der Düsenstöcke jeweils durch diese ausgebracht wird. Nicht benötigte Spritzflüssigkeit wird hingegen wieder zum Vorratsbehälter zurück gefördert. Durch den somit gebildeten Flüssigkeitskreislauf zirkuliert die Spritzflüssigkeit permanent im Verteilsystem.

Auch kann das Verteilsystem mehrere derartige Flüssigkeitskreisläufe vorsehen, so dass bspw. jede Teilbreite einen separaten Flüssigkeitskreislauf aufweist. Wobei die zwei oder mehr Flüssigkeitskreisläufe einen gemeinsamen Vorratsbehälter und eine gemeinsame Pumpe aufweisen können, aber auch jeweils einen separaten Vorratsbehälter und/oder eine separate Pumpe aufweisen können.

Die Flüssigkeitsleitung kann sich ebenso aus mehreren Abschnitten zusammensetzen, zwischen welchen Abschnitten bspw. Abzweige für die Düsenstöcke und/oder die Spritzdüsen und/oder die Verteildüsen münden.

Auch denkbar wäre es, dass die Spritzdüse und/oder Verteildüse bzw. die Düsenstöcke mit zwei oder mehr derartigen Flüssigkeitsleitungen bzw. Flüssigkeitskreisläufen verbunden sind um somit bspw. verschiedene Spritzflüssigkeiten ausbringen zu können.

Um eine noch exaktere Verringerung bzw. Einstellung der Ausbringmenge zu erreichen kann zudem vorgesehen sein, dass der jeweilige Druck in der Flüssigkeitsleitung entsprechend der Pulsweitenmodulation bzw. des Tastgrads des Schaltelements variiert wird.

In einer Weiterbildung der Erfindung ist der Abstand der Verteildüse und der Spritzdüse derartig definiert, dass sich die durch diese erzeugten Tropfenspektren nicht gegenseitig negativ beeinflussen.

Durch eine derartige Ausführung bzw. durch ein erfindungsgemäßes Verteilsystem wird somit die mittels eines Schaltelements erzeugte Pulsweite nicht wie aus dem Stand der Technik bekannt nur auf eine Verteildüse und somit auf eine sehr geringe Arbeitsbreite des Spritzgestänge übertragen sondern auf zumindest eine Verteildüse und eine Spritzdüse und somit in Abhängigkeit des Abstands dieser auf eine entsprechend größere Arbeitsbreite des Spritzgestänges.

In einer Weiterbildung kann vorgesehen sein, dass das jeweilige mittels der Verteildüse und/oder Spritzdüse erzeugte Tropfenspektrum und/oder die durch die Spritzflüssigkeit auf dem Pflanzenbestand hervorgerufene Benetzung sensorisch erfasst wird und die jeweilige Pulsweitenmodulation auf Basis dieses Tropfenspektrum und/oder auf Basis dieser Benetzung mittels einer Steuerungs- und/oder Regelungseinrichtung bzw. auf Basis eines in einer Steuerungs- und/oder Regelungseinrichtung hinterlegten Regelungsprogramm variabel angepasst wird. Auch kann eine Anpassung manuell durch eine Bedienperson erfolgen.

Dem Schaltelement nachgeordnet bzw. zumindest der Verteildüse und/oder der Spritzdüse kann ein Messmittel zur Erfassung der Ausbringmenge zugeordnet sein. Das Messmittel kann bspw. ein Durchflussmesser und/oder ein Volumenstrommesser sein. Auch die durch das Messmittel erfasste Ausbringmenge kann wiederum mittels eines in einer Regelungs- und/oder Steuerungseinrichtung hinterlegten Regelungsprogramm entsprechend mit ausgewertet werden. Das Messmittel ist jeweils so angeordnet das mittels diesem die Ausbringmenge von zumindest einer Verteildüse und/oder Spritzdüse erfasst wird.

Auch kann die Variation der Pulsweitenmodulation und/oder des Tastgrad in Abhängigkeit einer Höhenführung des Spritzgestänges, d.h. in Abhängigkeit eines Abstands zwischen dem Spritzgestänge und dem Pflanzenbestand bzw. der Ackerfläche erfolgen. Wobei diese Höhenführung bzw. dieser Abstand bspw. mittels am Spritzgestänge angeordneten Abstandsensoren und/oder Ultraschallsensoren erfasst werden kann. Wobei hierbei insbesondere gelten kann, je geringer der Abstand desto geringer die benötigte Menge an Spritzflüssigkeit und desto geringer der Tastgrad.

Auch kann vorgesehen sein, dass die Variation der Pulsweitenmodulation und/oder des Tastgrad in Abhängigkeit des Druckniveaus in der Flüssigkeitsleitung und/oder in Abhängigkeit der jeweiligen benötigten Ausbringmenge mittels der Regelungseinrichtung erfolgt. Wobei auch diese Regelgrößen wiederum mittels verschiedenster Überwachungsmittel erfasst bzw. überwacht werden können.

Zudem können die Vorgaben zur Pulsweitenmodulation mittels einer Eingabevorrichtung manuell eingegeben werden oder die Eingabevorrichtung kann mit einer Datenbank oder dergl. in Verbindung stehen. Die Eingabevorrichtung kann bspw. ein mobiles Endgerät und/oder ein Bedientableau oder dergl. sein.

Um ein Leerlaufen oder ein sog. Nachtropfen der Spritzdüsen in den Zeiträumen in denen das Schaltelement geschlossen ist, bzw. in Zeiträumen in denen keine Ausbringung von Spritzflüssigkeit erfolgen soll, zu verhindern, kann den Verteildüsen und/oder den Spritzdüsen und/oder der Flüssigkeitsleitung zugeordnet bzw. vorgeordnet oder in diese integriert ein Vorspannventil sein. Insbesondere ist zumindest ein derartiges Vorspannventil dem Verteilsystem zugeordnet. Das Vorspannventil ist insbesondere derartig ausgeführt, dass dieses erst ab einem definierten Druck öffnet. Sobald dieser Druck, durch bspw. ein verschließen des Schaltelement nicht mehr anliegt, schließt auch dieses Vorspannventil und es erfolgt keine Flüssigkeitsabgabe mehr mit bspw. den Spritzdüsen bzw. erfolgt keine Flüssigkeitsweiterleitung mehr im Verteilsystem. Somit wird mittels des Vorspannventils jeweils ein definierter Staudruck im Verteilsystem aufrechterhalten.

Das Vorspannventil kann hierbei bspw. ein Druckventil sein. Insbesondere kann das Vorspannventil ein Druckzuschaltventil sein. Zudem kann der Vorspanndruck bzw. der Öffnungsdruck des Vorspannventils größer oder gleich 0 bar oder größer oder gleich 0,2 bar und kleiner oder gleich 5 bar sein. Insbesondere kann der Öffnungsdruck des Vorspannventils jedoch 0,5 bar betragen.

Darüber hinaus wäre hierbei auch die Verwendung sog. Tropfstopventilen denkbar, welche auch in die Spritzdüsen integriert sein können. Derartige Ventile weisen in der Regel einen durch eine Feder vorgespannten Öffnungsmechanismus auf, welcher Öffnungsmechanismus erst nach dem Anliegen eines bestimmten Öffnungsdruck geöffnet wird.

In einer Weiterbildung der Erfindung kann zudem vorgesehen sein, dass die Pulsweitenmodulation jeweils in Abhängigkeit der Anzahl von dem Schaltelement nachgeordneten Spritzdüsen variiert wird. So kann vorgesehen sein, dass bspw. je mehr Spritzdüsen benachbart zur Verteildüse angeordnet sind, desto kleiner wird der Tastgrad. Dies könnte bspw. bedeuten, dass wenn am Schaltelement ein Tastgrad von 50% vorhanden ist, somit an den Spritzdüsen durch den Abstand den diese sowohl zum Schaltelement als auch zueinander aufweisen der Tastgrad an diesen 80% beträgt. Wobei auch wiederum zur Überwachung des Tastgrad zumindest einer der zumindest zwei dem Schaltelement nachgeordneten Spritzdüsen Messmittel oder dergl. zugeordnet sein können.

Die insbesondere Paarweise oder Gruppenweise angeordneten Verteildüsen und Spritzdüsen können bspw. mittels eines Verbindungselements verbunden sein. Welches Verbindungselement zudem mit einem Abzweig der Flüssigkeitsleitung verbunden sein kann. Auch kann das Verbindungselement mit einem oder zwei Düsenstöcken verbunden sein. Ebenso denkbar wäre es aber auch, dass das Verbindungselement mit einer am Düsenstock angebauten Spritzdüse und/oder Verteildüse verbunden wird. Darüber hinaus könnte an der Flüssigkeitsleitung ebenso eine Spritzdüse und/oder Verteildüse angebracht sein, mit welcher wiederum das Verbindungselement verbunden wird. Dem Verbindungselement können zudem zumindest eine Spritzdüse und zumindest eine Verteildüse, welche beabstandet zueinander sind, zugeordnet sein. Wobei der Abstand der Spritzdüsen und/oder der Verteildüsen größer oder gleich 10cm ist und insbesondere 25cm und/oder 50cm und/oder 100cm betragen kann.

Das Verbindungselement ist bspw. als L-förmiges, T-Förmiges; V-Förmiges oder U-Förmiges Element ausgebildet. Das Verbindungselement kann zudem ein- oder mehrteilig ausgeführt sein. Zudem kann das Verbindungselement sich einer Rohrkonstruktion zusammengesetzt sein. Die Verbindung kann kraft- form und/oder stoffschlüssig erfolgen. Die kraft- und/oder formschlüssige Verbindung kann beispielsweise Schraub-, Niet- und/oder Klemmverbindungen oder dergleichen umfassen. Die stoffschlüssige Verbindung kann beispielsweise Schweiß-, Kleb- und/oder Lötverbindungen oder dergleichen umfassen. Wahlweise wären Kombinationen einer kraft-, form- und/oder stoffschlüssigen Verbindung denkbar.

Darüber hinaus könnte vorgesehen sein das benachbart zu einer Verteildüse jeweils zumindest zwei Spritzdüsen angebracht sind. Wobei die Verteildüse hierbei insbesondere mittig zu den zumindest zwei Spritzdüsen angebracht ist. Und wobei zudem die Abstände zwischen den Spritzdüsen und der Verteildüse wiederum mindestens 10cm betragen können insbesondere jedoch 25cm und/oder 50cm und/oder 100cm betragen. Wobei die Verteildüsen und die Spritzdüsen jeweils fluidisch verbunden und/oder fluidisch wirkverbunden sind.

Zudem kann vorgesehen sein, dass eine Schaltung der jeweiligen Verteildüsen und/oder Spritzdüsen auf Basis einer Überlappung des durch die Verteildüsen und/oder Spritzdüsen erzeugten Spritzstrahls bzw. deren Spritzkegel erfolgt. Wobei diese Überlappung jeweils durch zwei benachbart angeordnete Verteildüsen und/oder Spritzdüsen definiert wird. Je nachdem ob diese Überlappung ausreichend ist oder nicht, können wiederum weitere Verteildüsen und/oder Spritzdüsen zugeschaltet werden. Hierbei kann wiederum auch vorgesehen sein dass die jeweiligen Spritzkegel sensorisch erfasst werden und mittels eines in einer Regelungseinrichtung hinterlegten Steuerungsprogramms ausgewertet werden. Die Überlappungen können zudem in Abhängigkeit des Höhenabstands des Spritzgestänges über dem Pflanzenbestand definiert sein, so kann wiederum gelten, je größer der Höhenabstand desto größer die Überlappung. Auch kann hierbei wiederum der Abstand der Verteildüsen und/oder Spritzdüsen zueinander entsprechend mit ausgewertet werden.

Insbesondere ist eine zumindest doppelte Überlappung der Spritzstrahlen bzw. der Spritzkegel vorgesehen, d.h. das jede Pflanze bzw. jeder Bereich der Ackerfläche mittels zumindest zwei Spritzkegel besprüht wird.

Auch könnte vorgesehen sein, dass die Spritzdüsen zudem mittels eines Ventil ein- und/oder ausgeschaltet werden können, so dass bspw. nur noch mittels der Verteildüse und/oder mittels der Spritzdüse eine Verteilung von Spritzflüssigkeit erfolgt.

In einer weiteren Ausführung kann vorgesehen sein, dass das Spritzgestänge in wenigstens zwei oder mehr Teilbreiten unterteilt ist bzw. zumindest zwei Teilbreiten aufweist, welche Teilbreiten jeweils unabhängig voneinander Spritzflüssigkeiten ausbringen können oder nicht. Hierfür kann bspw. vorgesehen sein, dass jeder Teilbreite eine separate Flüssigkeitsleitung und/oder ein separater Flüssigkeitskreislauf zugeordnet ist. In einer Weiterbildung der Erfindung kann auch hierbei wiederum vorgesehen sein, dass die Pulsweitenmodulation und somit die Ausbringmenge an den jeweiligen Teilbreiten unterschiedlich ist.

In einer weiteren Ausführungsform könnte vorgesehen sein, dass jeweils zumindest eine Verteildüse und zumindest eine beabstandet zu dieser angeordnete Spritzdüse eine Teilbreite bilden.

Die Anpassung der Ausbringmenge an Spritzflüssigkeit kann bspw. auf Basis des Pflanzenbestand erfolgen, so kann bspw. der Krankheitsbefall oder die Dichte des Pflanzenwachstums sensorisch erfasst werden oder es können von einer Datenbank Angaben hierzu in die Regelungseinrichtung eingelesen werden und die jeweilige Ausbringmenge auf Basis dieser Angaben entsprechend variiert werden.

Darüber hinaus kann die Ausbringmenge auf Basis von Fahrbewegungseigenschaften der Feldspritze variiert werden, so dass bspw. die Ausbringmenge unter Berücksichtigung einer Kurvenfahrt und/oder einer Beschleunigung und/oder einer Verzögerung erhöht oder verringert wird. Wofür wiederum die Pulsweitenmodulation bzw. insbesondere dessen Tastgrad variiert wird.

Darüber hinaus kann erfindungsgemäß vorgesehen sein, dass die Ansteuerung des Verteilsystems auf Basis von wenigstens zwei in der Steuerungs- und/oder Regelungseinrichtung hinterlegten Spritzprofilen erfolgt. Wobei die Spritzprofile hierbei jeweils wenigstens zwei Parameter und/oder Sensorwerte umfassen bzw. berücksichtigen, wobei bei einer Abweichung von wenigstens einem Parameter bzw. Sensorwert eines ersten Spritzprofiles eine automatisierte Ansteuerung der Verteilvorrichtung auf Grundlage der Parameter des wenigstens einen zweiten Spritzprofiles erfolgt. Erfindungsgemäß kann als ein Parameter auch die Pulsweitenmodulation, insbesondere der Tastgrad dieser als Parameter in die Regelung mit einfließen. Darüber hinaus können bspw. die Fahrbewegungseigenschaften und/oder die Höhenführung und/oder die Ausbringmenge als weiterer Parameter dienen. Zudem können als Parameter die Durchlassquerschnitte der Verteildüse und der Spritzdüse verwendet werden.

Zudem können die Vorgaben der Pulsweitenmodulation mittels einer Eingabevorrichtung manuell eingegeben werden oder die Eingabevorrichtung kann mit einer Datenbank oder dergl. in Verbindung stehen. Die Eingabevorrichtung kann bspw. ein mobiles Endgerät und/oder ein Bedientableau oder dergl. sein.

Es sei noch darauf hingewiesen, dass die Begriffe "Regelungseinrichtung" und "Steuerungseinrichtung" sich auf eine elektronische und/oder mechanische und/oder pneumatische und/oder hydraulische Steuerung beziehen können, die je nach Ausbildung Steuerungsaufgaben und/oder Regelungsaufgaben übernehmen können. Auch wenn hierin der Begriff "Regeln" verwendet wird, kann damit gleichsam zweckmäßig auch "Steuern" umfasst sein. Ebenso kann bei Verwendung des Begriff "Steuern" gleichsam auch eine "Regeln" damit umfasst sein.

Die Regelungseinrichtung kann hierbei insbesondere mit einer elektrischen und/oder pneumatischen und/oder hydraulischen und/oder einer Kombination dieser Energie- und Signalübertragungsarten basierenden Steuerung und/oder Schaltung in Wirkverbindung stehen oder diese mit umfassen bzw. beinhalten. Bspw. kann zur Ansteuerung der Steuerelemente und der Komponenten des Verteilsystem ein BUS-System wie bspw. ein CAN-Bus System vorgesehen sein. Auch drahtlose Kommunikationsschnittstellen wären denkbar.

Wenn zuvor das Erfindungsgemäße Verteilsystem beschrieben wurde, so sei an dieser Stelle ausdrücklich betont, dass alle Aspekte und Ausführungsvarianten, die im Zusammenhang mit dem Verteilsystem erläutert wurden, gleichermaßen Teilaspekte des nachfolgenden erfindungsgemäßen Verfahren betreffen oder sein können. Wenn daher an einer Stelle bei der Beschreibung oder auch bei den Anspruchsdefinitionen vom erfindungsgemäßen Verteilsystem die Rede ist, so gilt dies gleichermaßen für das erfindungsgemäße Verfahren. In umgekehrter Weise gilt dasselbe, so dass auch alle Aspekte die im Zusammenhang mit dem erfindungsgemäßen Verfahren erläutert werden, gleichermaßen Teilaspekte des Verteilsystems sein können.

Zur Lösung der Aufgaben schlägt die Erfindung zudem ein Verfahren zur Ausbringung von Spritzflüssigkeiten zur Verwendung in einer landwirtschaftlichen Feldspritze vor. Das Erfindungsgemäße Verfahren umfasst hierbei zumindest die nachfolgenden Schritte:
- Bereitstellung der jeweiligen Spritzflüssigkeit mittels zumindest einem Vorratsbehälter,
- Förderung der Spritzflüssigkeit und Versorgung von an einem Spritzgestänge angebrachten Spritzdüsen und/oder Verteildüsen mit Spritzflüssigkeit mittels einer Pumpe mit variabel veränderbarem Druck und/oder mittels auf einen konstanten Wert geregelten Druck vom Vorratsbehälter entlang einer, an einem an der Feldspritze angebauten Spritzgestänge geführten Flüssigkeitsleitung,
- Zerstäubung der Spritzflüssigkeit mittels zumindest einer Verteildüse welche mit einem, mit Pulsweitenmodulation betätigten Schaltelement angesteuert wird, und mittels zumindest einer beabstandet zur Verteildüse angeordneten Spritzdüse,
- Variation der Pulsweitenmodulation der Verteildüse in Abhängigkeit der Durchflussmenge an Spritzflüssigkeit der Spritzdüse.

Die hier beschriebenen Verfahrensschritte können kontinuierlich an der Feldspritze durchgeführt werden.

Die Spritzflüssigkeit wird jeweils mit veränderbarem und/oder auf einen konstanten Wert geregeltem Druck mittels einer Pumpe entlang der Flüssigkeitsleitung gefördert. Wobei der Flüssigkeitsleitung sowie dem Flüssigkeitskreislauf zudem, zur Veränderung der Ausbringmenge zumindest ein Regelventil zur Variation der Durchflussmenge an Spritzflüssigkeit durch die Flüssigkeitsleitung zugeordnet ist. Das Regelventil kann bspw. ein Durchgangsventil oder ein Volumenstromregler oder dergl. Ventil zur Regelung der Durchflussmenge an Spritzflüssigkeit sein. Der Druck in der Flüssigkeitsleitung kann jeweils mittels der Pumpe oder mittels anderer geeigneter Mittel geregelt werden.

Zudem können zur Überwachung des jeweiligen Druck in der Flüssigkeitsleitung bzw. im Verteilsystem auch entsprechende Sensoren bzw. Überwachungsmittel vorhanden sein. Insbesondere kann dieser Druck als Regelgröße für ein in der Regelungseinrichtung hinterlegtes Regelungsprogramm dienen.

Zur Verteilung der Spritzflüssigkeit sind am Spritzgestänge zueinander beabstandet eine Mehrzahl von Verteildüsen und Spritzdüsen angeordnet. Wobei mittels der Verteildüsen und der Spritzdüsen jeweils eine Zerstäubung der Spritzflüssigkeit erfolgt. Mittels der Verteildüsen und der Spritzdüsen wird somit jeweils ein, Tropfenspektrum erzeugt, auf Basis welches Tropfenspektrum anschließend jeweils die zu behandelnde Ackerfläche bzw. dessen Pflanzen entsprechend mit Spritzflüssigkeit bedeckt und benetzt werden.

Die Verteildüsen und die Spritzdüsen können in einem Mindestabstand zueinander von 10cm angebracht sein. Insbesondere sind die Verteildüsen und die Spritzdüsen in einem Abstand von 25cm und/oder 50cm und/oder 100cm zueinander angebracht. Auch andere Abstände wären hierbei möglich.

Die Ausbringmenge der Verteildüsen und/oder Spritzdüsen kann u. a. auf Basis von deren Querschnittsfläche bzw. auf Basis von deren Durchlassöffnung definiert werden. Zudem kann die Ausbringmenge der Verteildüse auf Basis der jeweiligen Pulsweitenmodulation definiert werden.

Die Erfindungsgemäße Verfahren zur Ausbringung von Spritzflüssigkeit sieht insbesondere vor, dass die Querschnittsfläche der benachbart zur mittels Pulsweitenmodulation angesteuerten Verteildüse angeordneten Spritzdüse eine derartige Größe aufweist bzw. derartig definiert ist, dass mittels dieser die zumindest annähernd gleiche Menge an Spritzflüssigkeit als mit der Verteildüse ausgebracht wird. Um eine möglichst gleiche Ausbringmenge mittels der Verteildüse und der Spritzdüse zu erreichen sieht das Verfahren demnach vor, dass die Pulsweitenmodulation des Schaltelement der Verteildüse, insbesondere jedoch der Tastgrad der Pulsweitenmodulation in Abhängigkeit der Durchflussmenge an Spritzflüssigkeit durch die Spritzdüse variiert wird. Wobei hierbei gelten kann, je größer die Querschnittsfläche D2 der Spritzdüse, desto größer dessen Durchflussmenge und desto größer der Tastgrad des Schaltelement der Verteildüse.

Anhand der Querschnittsfläche D1 der Verteildüsen und der Querschnittsfläche D2 der Spritzdüsen, anhand der durch die Flüssigkeitsleitung geförderten Menge an Spritzflüssigkeit sowie der bei den Verteildüsen angewandten Pulsweitenmodulation kann somit jeweils die Ausbringmenge an Spritzflüssigkeit definiert werden.

Zudem kann vorgesehen sein, dass bspw. die Verteildüsen und insbesondere die Spritzdüsen mit einer Blende ausgeführt sind mittels derer die Querschnittsfläche verändert werden kann, dies bedeutet, dass die Spritzdüse eine veränderbare Querschnittsfläche D2 aufweist und/oder dass die Verteildüse eine veränderbare Querschnittsfläche D1 aufweist. In einer derartigen Ausführungsvariante könnte zudem vorgesehen sein, dass die Querschnittsfläche D2 der Spritzdüse auf Basis der Pulsweitenmodulation und der Querschnittsfläche D1 der Verteildüse vergrößert oder verkleinert wird.

Vorzugsweise ist die Querschnittsfläche D1 der Verteildüse größer oder gleich als die Querschnittsfläche D2 der Spritzdüse.

Dem Schaltelement nachgeordnet bzw. zumindest der Verteildüse und/oder der Spritzdüse kann ein Messmittel zur Erfassung der Ausbringmenge zugeordnet sein. Das Messmittel kann bspw. ein Durchflussmesser und/oder ein Volumenstrommesser sein. Auch die durch das Messmittel erfasste Ausbringmenge kann wiederum mittels eines in einer Regelungs- und/oder Steuerungseinrichtung hinterlegten Regelungsprogramm entsprechend mit ausgewertet werden.

Die Variation der Pulsweitenmodulation kann bspw. durch Vorgabe durch eine Bedienperson, aber auch automatisiert erfolgen. Insbesondere erfolgt die Variation der Pulsweitenmodulation mittels einer Regelungs- und/oder Steuerungseinrichtung. Zudem können die Vorgaben zur Pulsweitenmodulation mittels einer Eingabevorrichtung manuell eingegeben werden oder die Eingabevorrichtung kann mit einer Datenbank oder dergl. in Verbindung stehen. Die Eingabevorrichtung kann bspw. ein mobiles Endgerät und/oder ein Bedientableau oder dergl. sein.

Auch kann die Variation der Pulsweitenmodulation und/oder des Tastgrad in Abhängigkeit einer Höhenführung des Spritzgestänges, d.h. in Abhängigkeit eines Abstands zwischen dem Spritzgestänge und dem Pflanzenbestand bzw. der Ackerfläche erfolgen. Wobei diese Höhenführung bzw. dieser Abstand bspw. mittels am Spritzgestänge angeordneten Abstandsensoren und/oder Ultraschallsensoren erfasst werden kann. Wobei hierbei insbesondere gelten kann, je geringer der Abstand desto geringer die benötigte Menge an Spritzflüssigkeit und desto geringer der Tastgrad.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Seitenansicht einer als selbstfahrende Verteilmaschine ausgeführten Feldspritze.
- Figur 2A: eine schematische Ansicht eines Verteilsystem einer Feldspritze und dessen Spitzgestänge mit einer Mehrzahl von Verteildüsen und Spritzdüsen.
- Figur 2B: eine schematische Ansicht eines Spritzgestänge bzw. einer Teilbreite eines Spritzgestänge mit einer Mehrzahl von Verteildüsen und Spritzdüsen.
- Figur 3: eine Draufsicht einer Ausführungsvariante einer Anordnung von Düsenstöcken mit Verteilteildüsen und Spritzdüsen.
- Figur 4: ein Diagramm einer Pulsweitenmodulation und deren Zusammenhänge.

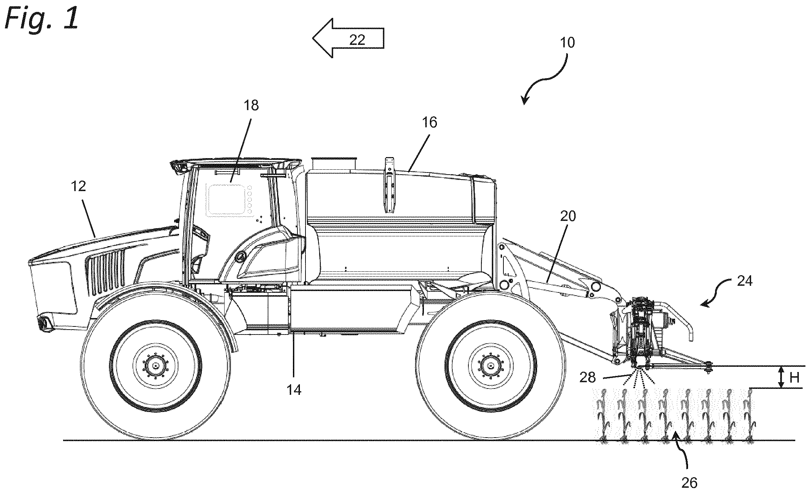

Die in den Figuren 1 bis 4 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie das erfindungsgemäße Verteilsystem und das erfindungsgemäße Verfahren ausgestaltet sein können und stellen keine abschließende Begrenzung dar.

Die schematische Seitenansicht der Figur 1 zeigt eine Ausführungsvariante einer selbstfahrenden landwirtschaftlichen Verteilmaschine 10, die auch als Feldspritze 10 zum Ausbringen von flüssigen und/oder festen Pflanzenschutzflüssigkeit bzw. Spritzflüssigkeit bezeichnet werden kann. An welcher Feldspritze 10 wiederum ein Erfindungsgemäßes Verteilsystem 12 angebaut sein kann bzw. mittels welcher Feldspritze 10 das Erfindungsgemäße Verfahren durchgeführt werden kann.

Die Feldspritze 10 umfasst gemäß der Figur 1 ein Trägerfahrzeug 13 mit eigenem Antrieb und einen Rahmen 14 zum Tragen der einzelnen Baugruppen, einen Vorratsbehälter 16 zum Bereitstellen und Mitführen der auszubringenden Pflanzenschutzflüssigkeit, eine Regelungseinrichtung 18 zur Regelung und/oder Steuerung der einzelnen Maschinenelemente und ihrer Parameter sowie ein, gegenüber dem Rahmen 14 mittels heckseitig am Trägerfahrzeug 12 angeordnetem Linearelement 20 höhenverstellbares und sich quer zur Fahrtrichtung 22 ersteckendes Spritzgestänge 24. Mittels des zumindest einen Linearelement 20 kann jeweils ein Höhenabstand H zwischen einem Pflanzenbestand bzw. einer Ackerfläche 26 und dem Spritzgestänge 24 variabel verstellt werden.

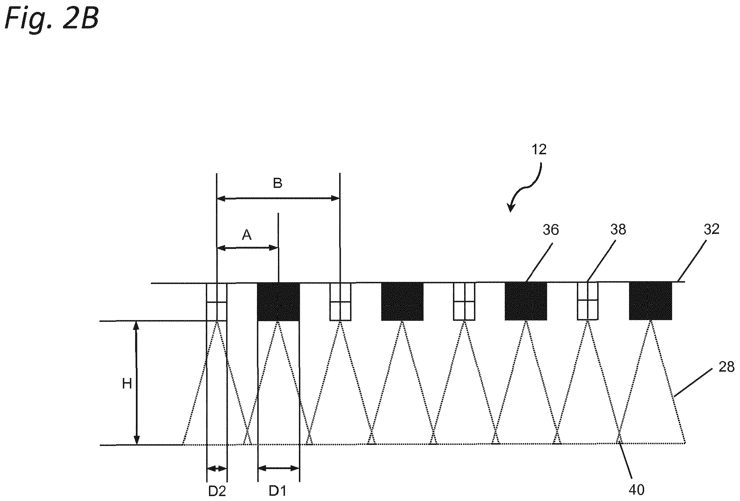

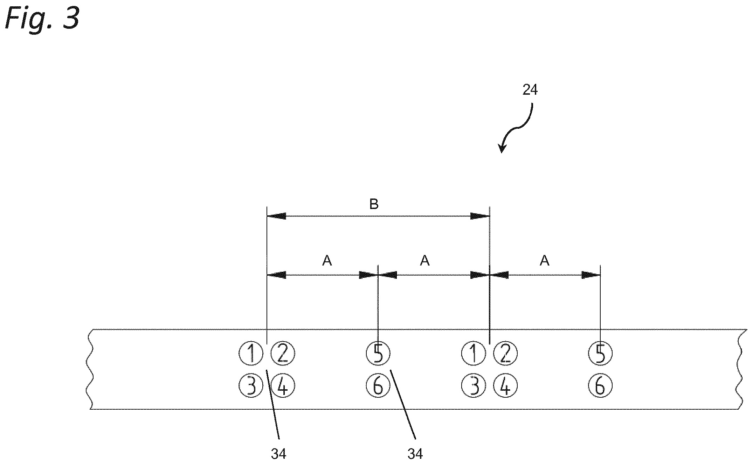

Am Spritzgestänge sind in regelmäßigen Abständen zueinander bspw. im Abstand von insbesondere 25cm oder 50cm (vergl. Figur 2B & Figur 3) mehrere Düsenstöcke angebracht. An diesen Düsenstöcken ist wiederum jeweils zumindest eine Verteildüse und/oder Spritzdüse, in der Regel jedoch mehrere Verteildüsen und/oder Spritzdüsen, zum gleichmäßigen Verteilen der Spritzflüssigkeit montiert. Die Verteildüsen und/oder Spritzdüsen erzeugen hierzu jeweils einen zum Pflanzenbestand bzw. zur Ackerfläche 26 hingerichteten Spritzstrahl bspw. in Form eines Sprüh- bzw. Spritzkegel 28.

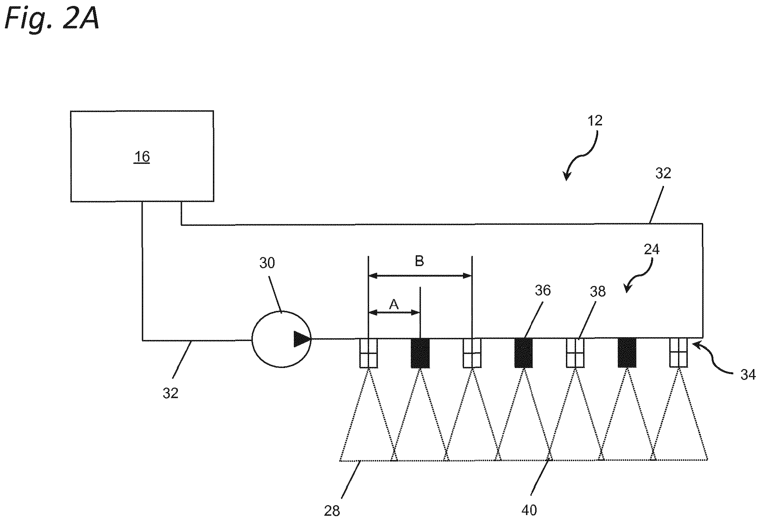

Aus den Figuren 2A und 2B gehen jeweils in einer stark vereinfachten Skizze Ausführungsbeispiele von Verteilsystemen 12 für landwirtschaftliche Feldspritzen 10 hervor. Wobei in Figur 2A ein Flüssigkeitskreislauf abgebildet ist, bei welchem Flüssigkeitskreislauf die Flüssigkeitsleitung 32 nach dem Passieren des Spritzgestänge bzw. der Verteildüsen und/oder Spritzdüsen wieder in den Vorratsbehälter mündet. Die Feldspritze 10 umfasst zunächst einen Vorratsbehälter 16 zum Bereitstellen und Mitführen der jeweiligen Pflanzenschutz- bzw. der Spritzflüssigkeit. Die Spritzflüssigkeit wird mittels einer Pumpe 30 entlang des Spritzgestänges 24 durch eine Flüssigkeitsleitung 32 zu den jeweiligen Düsenstöcken 34 gefördert. Wobei mittels der Pumpe 30 wiederum jeweils der Druck bzw. das Druckniveau in der Flüssigkeitsleitung 32 variiert werden kann aber auch auf einen zumindest weitgehend konstanten Wert geregelt werden kann.

Die Düsenstöcke 34 sind in regelmäßigen Abständen A von bspw. 25cm oder 50cm zueinander angeordnet. Wobei an den jeweiligen Düsenstöcken 34 jeweils zumindest eine Verteildüse 36 und/oder eine Spritzdüse 38 angebracht ist. Zudem sind die Verteildüsen und/oder die Spritzdüsen 38 wiederum in regelmäßigen Abständen B zueinander angebracht wobei dieser Abstand bspw. 50cm beträgt. Neben einer Ausführung des Verteilsystems 12 mit Düsenstöcken 34 wäre es auch denkbar die Verteildüsen 36 und/oder die Spritzdüsen 38 direkt an die Flüssigkeitsleitung 32 oder an einem in diesen mündenden Abzweig zu montieren.

Sowohl die Verteildüsen 36 als auch die Spritzdüsen 38 erzeugen einen nach unten gerichteten Spritzstrahl 28 in Form eines Spritz- bzw. Sprühkegel welche in den Ausführungsbeispielen der Figuren 2 jeweils identisch sind, diese könnten jedoch auch verschiedenartig sein. Insbesondere könnte dieser bei den Verteildüsen 36 in Abhängigkeit der Frequenz bzw. der Pulsweitenmodulation auch Unterbrechungen aufweisen. In deren unterem Bereich schneiden bzw. überlappen 40 sich diese, wobei wiederum diese Überlappung 40 von verschiedenen Faktoren abhängig sein kann, so bspw. von der Art der Verteildüse 36 und/oder der Spritzdüse 38, deren Abstände A bzw. B zueinander oder dem Höhenabstand des Spritzgestänge 24 zu einem hier nicht dargestellten Pflanzenbestand.

Die Spritzkegel 28 der Verteildüsen 36 und der Spritzdüsen 38 sind jedoch insbesondere jeweils derartig definiert, dass mittels der Verteildüsen 36 und der Spritzdüsen 38 jeweils die zumindest annähernd gleiche Menge ans Spritzflüssigkeit ausgebracht wird.

Gemäß den Ausführungsbeispielen der Figuren 2 sind jeweils zumindest eine Verteildüse 36 und eine Spritzdüse 38 benachbart zueinander angeordnet. Insbesondere sind die Verteildüse 36 und die benachbarte Spritzdüse 38 fluidisch wirkverbunden.

Um somit sowohl mit der Verteildüse 36 als auch mit der Spritzdüse 38 die zumindest annähernd gleiche Menge an Spritzflüssigkeit auszubringen ist darüber hinaus vorgesehen, dass die Verteildüse 36 mit einem, mit Pulsweitenmodulation betätigten Schaltelement angesteuert wird, wobei die Pulsweitenmodulation der Verteildüse 36 in Abhängigkeit der Durchflussmenge der zu dieser benachbarten Spritzdüse 38 variiert wird. Durch eine derartige optimierte Anordnung von Spritzdüsen 38 und Verteildüsen 36 kann jeweils erreicht werden dass die Ausbringmenge der durch eine Pulsweitenmodulation angesteuerten Verteildüse 36 zumindest annähernd gleich zu den, nicht mit einer Pulsweitenmodulation angesteuerten Spritzdüse 38. Diese Pulsweitenmodulation kann bspw. mittels einer Regelungseinrichtung automatisiert oder durch Vorgabe durch eine Bedienperson verändert werden.

Insbesondere ist das Verteilsystem 12 derartig ausgelegt, dass die Querschnittsfläche D2 der benachbart zur Verteildüse 36 angeordneten Spritzdüse 38 derartig definiert ist, dass mittels dieser die gleiche Menge an Pflanzenschutzflüssigkeit ausgebracht wird, als mittels der Verteildüse die eine Querschnittsfläche D1 aufweist. Wobei hierbei insbesondere vorgesehen sein kann das D1 größer oder gleich ist als D2.

In einer Ausführungsvariante könnte demnach vorgesehen sein, dass bspw. die Verteildüse 36 eine Querschnittsfläche D1 von ø 0,6mm² aufweist. Zudem könnte das, der Verteildüse 36 zugeordnete Schaltelement bspw. mit einer Pulsweitenmodulation mit 1 Hz und einem Tastgrad von 50% angesteuert werden. Darüber hinaus wird die Spritzflüssigkeit bspw. mit einem weitgehend konstanten Druck von 1 bar entlang der Flüssigkeitsleitung 32 gefördert. Um mit einer Mindestanzahl an Verteildüsen 36 eine möglichst geringe Menge an benötigter Pflanzenschutzflüssigkeit zu erreichen, ist in einer derartigen Ausführungsvariante vorgesehen, dass die Querschnittsfläche D2 der benachbart zur Verteildüse 36 angeordneten Spritzdüse 38 ø 0,3mm² beträgt. Somit wird erreicht das aufgrund des Tastgrad von 50% und der Querschnittsfläche D1 von ø 0,6mm² mit der Verteildüse 36 die zumindest annähernd gleiche Menge an Pflanzenschutzflüssigkeit ausgebracht wird als mit der eine Querschnittsfläche D2 von ø 0,3mm² aufweisenden Spritzdüse 38.

Figur 3 zeigt in einer Draufsicht ein weiteres Ausführungsbeispiel eines Abschnittes des Spritzgestänges 24 mit daran angeordneten Düsenstöcken 34. Hierbei werden insgesamt vier Düsenstöcke 34 dargestellt, wobei die Düsenstöcke 34 jeweils als Mehrfachdüsenstöcke ausgebildet sind und an einem Düsenstock 34 vier Verteildüsen 36 und/oder Spritzdüsen 38 und am zu diesem benachbarten Düsenstock 34 zwei Verteildüsen 36 und/oder Spritzdüsen 38 angebracht sind. Die Abstände hierbei betragen wiederum zwischen den Düsenstöcken B=25cm oder zwischen zwei identischen Düsenstöcken A=50cm wobei es auch denkbar wäre hier andere Abstände zu definieren. Die Maße werden jeweils in Bezug auf die Mitte der Mehrfachdüsenstöcke gemessen bzw. definiert.

Die Verteildüsen 36 und/oder Spritzdüsen 38 werden jeweils von 1-6 nummeriert. Wobei hierbei insbesondere vorgesehen sein kann, dass an den Positionen 1 bis 4 Verteildüsen angebracht sind, bzw. dass diese mit einem mit Pulsweitenmodulation betätigten Schaltelement angesteuert werden und wobei zudem vorgesehen sein kann, dass an den Position 5 und 6 jeweils Spritzdüsen 38 angebaut sind, welche Spritzdüsen 38 nicht mit einer Pulsweitenmodulation angesteuert werden. Auch wäre eine umgekehrte Anordnung denkbar so, dass an den Positionen 1 bis 4 Spritzdüsen 38 und an den Positionen 5 und 6 Verteildüsen 36 angebracht sind. Auch Kombinationen wären denkbar so dass sowohl an den Positionen 1 bis 4 als auch an den Positionen 5 und 6 Verteildüsen 36 und/oder Spritzdüsen 38 angebracht sein können.

Es kann zudem vorgesehen sein, dass die Verteildüsen 36 und/oder Spritzdüsen 1 bis 4 und 5 und 6 jeweils unterschiedliche Spritzstrahlen 28 bzw. Sprühnebel bzw. Spritzkegel erzeugen. Zudem können die Verteildüsen 36 und/oder Spritzdüsen 38 in beliebiger Weise mittels der Regelungseinrichtung miteinander geschalten werden, so dass bspw. nur eine der Verteildüsen und/oder Spritzdüsen 1 bis 4 oder die Verteildüse 36 und/oder Spritzdüse 38 der Position 5 oder 6 geschalten werden. Insbesondere sieht die Erfindung jedoch jeweils eine Kombination einer Verteildüse 36 und/oder Spritzdüse 38 der Position 1 bis 4 mit der Verteildüse und/oder Spritzdüse der Position 5 oder 6 vor. Wobei auch wiederum diese Verschaltung mittels eines in einer Regelungseinrichtung hinterlegten Steuerungsprogramms und/oder durch manuelle Vorgabe durch eine Bedienperson erfolgen kann. Wobei jeweils vorgesehen sein kann, dass jeweils die gleiche Anzahl an Verteildüsen 36 und Spritzdüsen 38 aktiv geschalten werden.

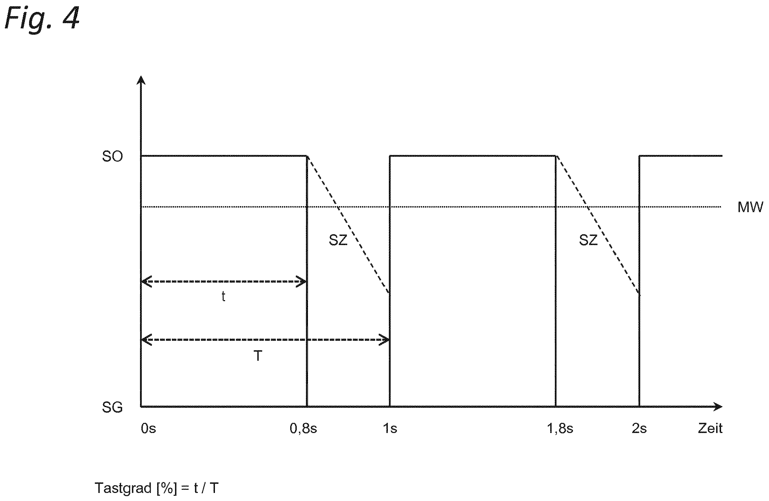

Weitere Details einer Pulsweitenmodulation und deren Zusammenhänge gehen aus dem Diagramm der Figur 4 hervor.

Die Pulsweitenmodulation erfolgt hierbei mit einer Frequenz von 1 Hz, wobei hierbei auch andere Frequenzen möglich wären, bspw. 50Hz oder 100Hz oder 200Hz oder dergl. Die Frequenz kann ein in der Steuerungs- und/oder Regelungseinrichtung hinterlegter Optimierungsparameter sein, welcher Optimierungsparameter in Abhängigkeit der jeweiligen Komponenten des Verteilsystems 12 festgelegt sein kann.

Die Erhöhung oder Verringerung der Ausbringmenge erfolgt auf Basis eines Tastgrad. Dieser Tastgrad wird durch ein Verhältnis zwischen der Impulsdauer t und der Periodendauer T bestimmt. Der Tastgrad ist somit definiert durch t / T. Der Tastgrad wird zudem als Prozentwert % angegeben. Vereinfacht bedeutet dies, dass der Tastgrad die Zeit definiert in der das Schaltelement geöffnet ist.

Im Ausführungsbeispiel der Figur 4 wird bspw. der Frequenz von 1 Hz ein Tastgrad von 80% zugrunde gelegt, das bedeutet, dass das Schaltelement theoretisch 0,8s geöffnet ist und 0,2s geschlossen ist. Da jedoch Schaltelemente bzw. Verteildüsen in der Regel eine Eigenträgheit aufweisen werden diese aufgrund der hohen Frequenzen in der Regel nicht komplett geschlossen, sondern jeweils in Abhängigkeit der Frequenz und des Tastgrad nur auf eine entsprechende sich zwischen der geschlossenen und geöffneten Position einstellenden Zwischenstellungen. Bezogen auf den Durchfluss an Spritzflüssigkeit bedeutet dies, dass sich somit ein Mittelwert MW zwischen der geöffneten Stellung SO des Schaltelement 38 und der geschlossenen Stellung SG des Schaltelements einstellt. So das auch die Ausbringmenge an Spritzflüssigkeit sich auf diesen Mittelwert MW einpendelt, was wiederum bedeutet das somit die Durchflussmenge bzw. die Ausbringmenge an Spritzflüssigkeit gegenüber der geöffneten Stellung SO des Schaltelement reduziert wird. Wie aus dem Diagramm der Figur 4 ersichtlich wird, kann die Ausbringmenge insbesondere durch Erhöhung des Tastgrad erfolgen bzw. insbesondere durch Erhöhung der Impulsdauer t.

Zudem ist in Figur 4 darüber hinaus noch ein sich durch die Eigenträgheit des Schaltelement einstellendes Signal des Schließ- bzw. Öffnungsmechanismus des Schaltelement mit abgebildet, welcher im Ausführungsbeispiel der Figur 4 bspw. ein sog. Sägezahnsignal ausbildet. Auch andere Signale wären je nach Ausführungsform des Schaltelements denkbar.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale der unabhängigen Ansprüche jeweils unabhängig voneinander offenbart. Zusätzlich sind auch die Merkmale der Unteransprüche unabhängig von sämtlichen Merkmalen des jeweiligen unabhängigen Anspruchs 1 oder des Verfahrensanspruchs 21 offenbart.

### Bezugszeichenliste

- 10: Verteilmaschine, Feldspritze
- 12: Verteilsystem
- 13: Trägerfahrzeug
- 14: Rahmen
- 16: Vorratsbehälter
- 18: Regelungseinrichtung
- 20: Linearelement
- 22: Fahrtrichtung
- 24: Spritzgestänge
- 26: Pflanzenbestand, Ackerfläche
- 28: Spritzstrahl, Sprühkegel, Spritzkegel
- 30: Pumpe
- 32: Flüssigkeitsleitung
- 34: Düsenstock
- 36: Verteildüse
- 38: Spritzdüse
- 40: Überlappung

- A: Abstand Düsenstock
- B: Abstand Verteildüse oder Abstand Spritzdüsen
- D1: Querschnittsfläche Verteildüse
- D2: Querschnittsfläche Spritzdüse
- H: Höhenabstand
- t: Impulsdauer
- T: Periodendauer
- MW: Mittelwert
- SO: geöffnete Stellung Schaltelement
- SG: geschlossene Stellung Schaltelement
- SZ: Sägezahnsignal

## Patentansprüche

1. Verteilsystem (12) einer landwirtschaftlichen Feldspritze (10) zur Ausbringung von Spritzflüssigkeiten, mit zumindest einem Vorratsbehälter (16) zur Bereitstellung der jeweiligen Spritzflüssigkeit, wobei die Spritzflüssigkeit mittels einer Pumpe (30) mit variabel veränderbaren und/oder mittels auf einen konstanten Wert geregelten Druck vom Vorratsbehälter (16) entlang einer, an einem an der Feldspritze (10) angebauten Spritzgestänge (24) geführten Flüssigkeitsleitung gefördert wird, wodurch jeweils am Spritzgestänge (24) zueinander beabstandet angebrachte Spritzdüsen (38) und Verteildüsen (36) mit Spritzflüssigkeit versorgt werden, **dadurch gekennzeichnet, dass** benachbart zu zumindest einer Spritzdüse (38) eine Verteildüse (36) angebracht ist, wobei die Verteildüse (36) mit einem, mit Pulsweitenmodulation betätigten Schaltelement angesteuert wird, wobei die Pulsweitenmodulation der Verteildüse (36) in Abhängigkeit der Durchflussmenge der Spritzdüse (38) variiert wird.

2. Verteilsystem (12) nach Anspruch 1, **dadurch gekennzeichnet, dass** die Spritzdüse (38) nicht unmittelbar mit einem, mit Pulsweitenmodulation betätigten Schaltelement angesteuert wird.

3. Verteilsystem (12) nach Anspruch 1 oder 2, **dadurch gekennzeichnet, dass** die Pulsweitenmodulation durch einen sich durch ein Verhältnis aus Impulsdauer (t) und einer Periodendauer (T) ergebenden Tastgrad sowie durch eine Frequenz definiert wird.

4. Verteilsystem (12) nach einem der vorhergehenden Ansprüche, **dadurch gekennzeichnet, dass** eine Erhöhung der Ausbringmenge der Verteildüse (36) durch eine Erhöhung des Tastgrad erfolgt, insbesondere durch eine Erhöhung der Impulsdauer (t) und/oder durch eine Erhöhung der Querschnittsfläche D1 erfolgt und dass eine Verringerung der Ausbringmenge der Verteildüse (36) durch eine Verringerung des Tastgrad erfolgt, insbesondere durch eine Verringerung der Impulsdauer (t) und/oder durch eine Verringerung der Querschnittsfläche D1 erfolgt.

5. Verteilsystem (12) nach einem der vorhergehenden Ansprüche, **dadurch gekennzeichnet, dass** die Frequenz der Pulsweitenmodulation in Abhängigkeit der jeweiligen Verteildüse (36) und der zu dieser benachbarten in einem Abstand angeordneten Spritzdüse (38) erhöht oder verringert wird.

6. Verteilsystem (12) nach einem der vorhergehenden Ansprüche, **dadurch gekennzeichnet, dass** dem Schaltelement und/oder der Verteildüse (36) und/oder Spritzdüse (38) ein Überwachungsmittel oder Messmittel zur Erfassung der Ausbringmenge zugeordnet ist.

7. Verteilsystem (12) nach einem der vorhergehenden Ansprüche, **dadurch gekennzeichnet, dass** eine Variation der Pulsweitenmodulation und/oder des Tastgrad in Abhängigkeit einer Höhenführung des Spritzgestänge (24) und/oder in Abhängigkeit des Druckniveaus in der Flüssigkeitsleitung erfolgt.

8. Verteilsystem (12) nach einem der vorhergehenden Ansprüche, **dadurch gekennzeichnet, dass** der Druck in der Flüssigkeitsleitung mittels der Pumpe (30) auf einen zumindest weitgehend konstanten Wert geregelt wird.

9. Verteilsystem (12) nah einem der vorhergehenden Ansprüche, **dadurch gekennzeichnet, dass** das Druckniveau in der Flüssigkeitsleitung größer oder gleich 0,5 bar und kleiner oder gleich 10 bar ist, vorzugsweise jedoch zwischen 0,5 bar und 3 bar beträgt und insbesondere 0,5 bar bis 1 bar beträgt.

10. Verteilsystem (12) nach einem der vorhergehenden Ansprüche, **dadurch gekennzeichnet, dass** dem Verteilsystem (12) zumindest ein Vorspannventil (40) zugeordnet ist.

11. Verteilsystem (12) nach einem der vorhergehenden Ansprüche, **dadurch gekennzeichnet, dass** das Vorspannventil (40) einen Vorspanndruck bzw. einen Öffnungsdruck aufweist, der größer oder gleich 0 bar oder größer oder gleich 0,2 bar und kleiner oder gleich 5 bar ist, insbesondere jedoch 0,5 bar beträgt.

12. Verteilsystem (12) nach einem der vorhergehenden Ansprüche, **dadurch gekennzeichnet, dass** die zumindest eine Verteildüse (36) und die zumindest eine Spritzdüse (38) mittels eines Verbindungselements verbunden sind.

13. Verteilsystem (12) nach einem der vorhergehenden Ansprüche, **dadurch gekennzeichnet, dass** das Verbindungselement mit einem Abzweig der Flüssigkeitsleitung verbunden ist und/oder dass das Verbindungselement mit dem Düsenstock verbunden ist und/oder dass das Verbindungselement mit einer am Düsenstock angebauten Spritzdüse (38) und/oder Verteildüse (36) verbunden ist.

14. Verteilsystem (12) nach einem der vorhergehenden Ansprüche, **dadurch gekennzeichnet, dass** die zumindest eine Verteildüse (36) und die zumindest eine Spritzdüse (38) fluidisch verbunden sind.

15. Verteilsystem (12) nach einem der vorhergehenden Ansprüche, **dadurch gekennzeichnet, dass** das Spritzgestänge (24) zumindest zwei Teilbreiten aufweist, welche Teilbreiten jeweils unabhängig voneinander Spritzflüssigkeiten ausbringen können, wobei jeder Teilbreite zumindest eine Verteildüse (36) mit einem, mit Pulsweitenmodulation betätigten Schaltelement zugeordnet ist, sowie dass jeder Teilbreite zumindest eine Spritzdüse (38) zugeordnet ist.

16. Verteilsystem (12) nach einem der vorhergehenden Ansprüche, **dadurch gekennzeichnet, dass** die Verteildüse (36) und die Spritzdüse (38) in einem Mindestabstand zueinander von 10cm angebracht sind, insbesondere jedoch in einem Abstand von 25cm und/oder 50cm und/oder 100cm zueinander angebracht sind.

17. Verteilsystem (12) nach einem der vorhergehenden Ansprüche, **dadurch gekennzeichnet, dass** die Spritzdüse (38) eine veränderbare Querschnittsfläche D2 aufweist und/oder dass die Verteildüse (36) eine veränderbare Querschnittsfläche D1 aufweist.

18. Verteilsystem (12) nach einem der vorhergehenden Ansprüche, **dadurch gekennzeichnet, dass** die Querschnittsfläche D2 auf Basis der Querschnittsfläche D1 und der Pulsweitenmodulation der Verteildüse (36) variiert wird.

19. Verteilsystem (12) nach einem der vorhergehenden Ansprüche, **dadurch gekennzeichnet, dass** die Querschnittsfläche D1 der Verteildüse (36) größer oder gleich ist wie die Querschnittsfläche D2 der Spritzdüse (38).

20. Verteilsystem (12) nach einem der vorhergehenden Ansprüche, **dadurch gekennzeichnet, dass** die Querschnittsfläche D1 und die Querschnittsfläche D2 derartig definiert sind, dass mittels der Spritzdüse (38) und der Verteildüse (36) die zumindest annähernd gleiche Menge an Spritzflüssigkeit ausgebracht wird.

21. Verfahren zur Ausbringung von Spritzflüssigkeiten zur Verwendung in einer landwirtschaftlichen Feldspritze (10) aufweisend die Schritte:
- Bereitstellung der jeweiligen Spritzflüssigkeit mittels zumindest einem Vorratsbehälter (16),
- Förderung der Spritzflüssigkeit und Versorgung von an einem Spritzgestänge (24) angebrachten Spritzdüsen (38) und Verteildüsen (36) mit Spritzflüssigkeit, mittels einer Pumpe (30) mit variabel veränderbarem und/oder mittels auf einen konstanten Wert geregelten Druck vom Vorratsbehälter (16) entlang einer, an einem an der Feldspritze (10) angebauten Spritzgestänge (24) geführten Flüssigkeitsleitung,
- Zerstäubung der Spritzflüssigkeit mittels zumindest einer Verteildüse (36) welche mit einem, mit Pulsweitenmodulation betätigten Schaltelement angesteuert wird, und mittels zumindest einer beabstandet zur Verteildüse (36) angeordneten Spritzdüse (38),
Variation der Pulsweitenmodulation der Verteildüse (36) in Abhängigkeit der Durchflussmenge an Spritzflüssigkeit der Spritzdüse (38).

22. Verfahren nach Anspruch 21, **dadurch gekennzeichnet, dass** die Spritzdüse (38) nicht unmittelbar mit einem, mit Pulsweitenmodulation betätigten Schaltelement angesteuert wird.

23. Verfahren nach Anspruch 21 oder 22, **dadurch gekennzeichnet, dass** eine Erhöhung der Ausbringmenge der Verteildüse (36) durch eine Erhöhung des Tastgrad erfolgt, insbesondere durch eine Erhöhung der Impulsdauer (t) und/oder durch eine Erhöhung der Querschnittsfläche D1 erfolgt und dass eine Verringerung der Ausbringmenge der Verteildüse (36) durch eine Verringerung des Tastgrad erfolgt, insbesondere durch eine Verringerung der Impulsdauer (t) und/oder durch eine Verringerung der Querschnittsfläche D1 erfolgt.

24. Verfahren nach einem der Ansprüche 21 bis 23, **dadurch gekennzeichnet, dass** dem Schaltelement und/oder der Verteildüse (36) und/oder Spritzdüsen (38) ein Überwachungsmittel oder Messmittel zur Erfassung der Ausbringmenge zugeordnet ist.

25. Verfahren nach einem der Ansprüche 21 bis 24, **dadurch gekennzeichnet, dass** eine Variation der Pulsweitenmodulation und/oder des Tastgrad in Abhängigkeit einer Höhenführung des Spritzgestänges (24) und/oder in Abhängigkeit des Druckniveaus in der Flüssigkeitsleitung erfolgt.

26. Verfahren nach einem der Ansprüche 21 bis 25, **dadurch gekennzeichnet, dass** die Spritzdüse (38) eine veränderbare Querschnittsfläche D2 aufweist und/oder dass die Verteildüse (36) eine veränderbare Querschnittsfläche D1 aufweist.

27. Verfahren nach einem der Ansprüche 21 bis 26, **dadurch gekennzeichnet, dass** die Querschnittsfläche D2 auf Basis der Querschnittsfläche D1 und der Pulsweitenmodulation der Verteildüse (36) variiert wird.

## Claims

1. A distribution system (12) of an agricultural field sprayer (10) for the application of spray liquids, with at least one storage container (16) for providing the respective spray liquid, wherein the spray liquid is conveyed by means of a pump (30) at a variably changeable pressure and/or by means of a pressure regulated to a constant value from the storage container (16) along a liquid line guided to a spray boom (24) attached to the field sprayer (10), as a result of which spray nozzles (38) and distribution nozzles (36) which are each provided on the spray boom (24) at a distance from one another are supplied with spray liquid, **characterized in that** a distribution nozzle (36) is provided adjacent to at least one spray nozzle (38), wherein the distribution nozzle (36) is activated with a switching element, which is actuated by pulse width modulation, wherein the pulse width modulation of the distribution nozzle (36) is varied depending on the flow rate of the spray nozzle (38).

2. The distribution system (12) according to Claim 1, **characterized in that** the spray nozzle (38) is not activated directly with a switching element actuated by pulse width modulation.

3. The distribution system (12) according to Claim 1 or 2, **characterized in that** the pulse width modulation is defined by a duty factor, which is produced by a ratio of pulse duration (t) and a period duration (T), and by a frequency.

4. The distribution system (12) according to one of the preceding claims, **characterized in that** the application rate of the distribution nozzle (36) is increased by an increase of the duty factor, in particular by an increase of the pulse duration (t) and/or by an increase of the cross-sectional area D1, and **in that** the application rate of the distribution nozzle (36) is reduced by a reduction of the duty factor, in particular by a reduction of the pulse duration (t) and/or by a reduction of the cross-sectional area D1.

5. The distribution system (12) according to one of the preceding claims, **characterized in that** the frequency of the pulse width modulation is increased or reduced depending on the respective distribution nozzle (36) and the spray nozzle (38) which is arranged adjacent thereto at a distance.

6. The distribution system (12) according to one of the preceding claims, **characterized in that** the switching element and/or the distribution nozzle (36) and/or spray nozzle (38) is assigned a monitoring means or a measurement means for detecting the application rate.

7. The distribution system (12) according to one of the preceding claims, **characterized in that** the pulse width modulation and/or the duty factor are/is varied depending on a height setting of the spray boom (24) and/or depending on the pressure level in the liquid line.

8. The distribution system (12) according to one of the preceding claims, **characterized in that** the pressure in the liquid line is regulated by means of the pump (30) to an at least substantially constant value.

9. The distribution system (12) according to one of the preceding claims, **characterized in that** the pressure level in the liquid line is greater than or equal to 0.5 bar and smaller than or equal to 10 bar, but is preferably between 0.5 bar and 3 bar and in particular is 0.5 bar to 1 bar.

10. The distribution system (12) according to one of the preceding claims, **characterized in that** the distribution system (12) is assigned at least one pre-loading valve (40).

11. The distribution system (12) according to one of the preceding claims, **characterized in that** the pre-loading valve (40) has a pre-loading pressure or an opening pressure which is greater than or equal to 0 bar or greater than or equal to 0.2 bar and smaller than or equal to 5 bar, but in particular is 0.5 bar.

12. The distribution system (12) according to one of the preceding claims, **characterized in that** the at least one distribution nozzle (36) and the at least one spray nozzle (38) are connected by means of a connecting element.

13. The distribution system (12) according to one of the preceding claims, **characterized in that** the connecting element is connected to a branch of the liquid line, and/or **in that** the connecting element is connected to the nozzle holder, and/or **in that** the connecting element is connected to a spray nozzle (38) and/or distribution nozzle (36) attached to the nozzle holder.

14. The distribution system (12) according to one of the preceding claims, **characterized in that** the at least one distribution nozzle (36) and the at least one spray nozzle (38) are fluidically connected.

15. The distribution system (12) according to one of the preceding claims, **characterized in that** the spray boom (24) has at least two partial widths, which partial widths can each apply spray liquids independently of one another, wherein each partial width is assigned at least one distribution nozzle (36) with a switching element actuated by pulse width modulation, and **in that** each partial width is assigned at least one spray nozzle (38).

16. The distribution system (12) according to one of the preceding claims, **characterized in that** the distribution nozzle (36) and the spray nozzle (38) are provided at a minimum distance from each other of 10 cm, but in particular are provided at a distance of 25 cm and/or 50 cm and/or 100 cm from each other.

17. The distribution system (12) according to one of the preceding claims, **characterized in that** the spray nozzle (38) has a variable cross-sectional area D2, and/or **in that** the distribution nozzle (36) has a variable cross-sectional area D1.

18. The distribution system (12) according to one of the preceding claims, **characterized in that** the cross-sectional area D2 is varied on the basis of the cross-sectional area D1 and the pulse width modulation of the distribution nozzle (36).

19. The distribution system (12) according to one of the preceding claims, **characterized in that** the cross-sectional area D1 of the distribution nozzle (36) is greater than or equal to the cross-sectional area D2 of the spray nozzle (38).

20. The distribution system (12) according to one of the preceding claims, **characterized in that** the cross-sectional area D1 and the cross-sectional area D2 are defined in such a manner that the at least approximately identical quantity of spray liquid is applied by means of the spray nozzle (38) and the distribution nozzle (36).

21. A method for the application of spray liquids for use in an agricultural field sprayer (10), having the steps of:
- providing the respective spray liquid by means of at least one storage container (16),
- conveying the spray liquid and supplying spray nozzles (38) and distribution nozzles (36) provided on a spray boom (24) with spray liquid by means of a pump (30) with a variably changeable pressure and/or by means of pressure regulated to a constant value from the storage container (16) along a liquid line guided on a spray boom (24) attached to the field sprayer (10),
- atomizing the spray liquid by means of at least one distribution nozzle (36) which is activated with a switching element actuated by pulse width modulation, and by means of at least one spray nozzle (38) arranged spaced apart from the distribution nozzle (36),
varying the pulse width modulation of the distribution nozzle (36) depending on the flow rate of spray liquid at the spray nozzle (38).

22. The method according to Claim 21, **characterized in that** the spray nozzle (38) is not activated directly with a switching element actuated by pulse width modulation.

23. The method according to Claim 21 or 22, **characterized in that** the application rate of the distribution nozzle (36) is increased by an increase of the duty factor, in particular by an increase of the pulse duration (t) and/or by an increase of the cross-sectional area D1, and **in that** the application rate of the distribution nozzle (36) is reduced by a reduction of the duty factor, in particular by a reduction of the pulse duration (t) and/or by a reduction of the cross-sectional area D1.

24. The method according to one of Claims 21 to 23, **characterized in that** the switching element and/or the distribution nozzle (36) and/or spray nozzles (38) is assigned a monitoring means or a measurement means for detecting the application rate.

25. The method according to one of Claims 21 to 24, **characterized in that** the pulse width modulation and/or the duty factor are/is varied depending on a height setting of the spray boom (24) and/or depending on the pressure level in the liquid line.

26. The method according to one of Claims 21 to 25, **characterized in that** the spray nozzle (38) has a variable cross-sectional area D2, and/or **in that** the distribution nozzle (36) has a variable cross-sectional area D1.

27. The method according to one of Claims 21 to 26, **characterized in that** the cross-sectional area D2 is varied on the basis of the cross-sectional area D1 and the pulse width modulation of the distribution nozzle (36).

## Revendications

1. Système de distribution (12) d'un pulvérisateur (10) agricole pour l'épandage de liquides de pulvérisation, avec au moins un réservoir (16) pour fournir le liquide de pulvérisation respectif, dans lequel le liquide de pulvérisation est refoulé au moyen d'une pompe (30) avec une pression pouvant être modifiée de manière variable et/ou régulée sur une valeur constante depuis le réservoir (16) le long d'un conduit de liquide guidé sur une rampe de pulvérisation (24) montée sur le pulvérisateur (10), ce qui permet d'alimenter en liquide de pulvérisation respectivement des buses de pulvérisation (38) et des buses de distribution (36) installées à distance les unes par rapport aux autres sur la rampe de pulvérisation (24), **caractérisé en ce qu'**une buse de distribution (36) est installée de manière adjacente par rapport à au moins une buse de pulvérisation (38), dans lequel la buse de distribution (36) est pilotée avec un élément de commutation actionné avec une modulation de largeur d'impulsion, dans lequel la modulation de largeur d'impulsion de la buse de distribution (36) varie en fonction du débit de la buse de pulvérisation (38).

2. Système de distribution (12) selon la revendication 1, **caractérisé en ce que** la buse de pulvérisation (38) n'est pas pilotée directement avec un élément de commutation actionné avec une modulation de largeur d'impulsion.

3. Système de distribution (12) selon la revendication 1 ou 2, **caractérisé en ce que** la modulation de largeur d'impulsion est définie par un degré de balayage résultant d'un rapport entre une durée d'impulsion (t) et une durée de période (T) ainsi que par une fréquence.

4. Système de distribution (12) selon l'une quelconque des revendications précédentes, **caractérisé en ce qu'**une augmentation de la quantité d'épandage de la buse de distribution (36) se fait par une augmentation du degré de balayage, en particulier par une augmentation de la durée d'impulsion (t) et/ou par une augmentation de la surface de section transversale D1, et qu'une réduction de la quantité d'épandage de la buse de distribution (36) se fait par une réduction du degré de balayage, en particulier par une réduction de la durée d'impulsion (t) et/ou par une réduction de la surface de section transversale D1.

5. Système de distribution (12) selon l'une quelconque des revendications précédentes, **caractérisé en ce que** la fréquence de la modulation de largeur d'impulsion est augmentée ou réduite en fonction de la buse de distribution (36) respective et de la buse de pulvérisation (38) adjacente par rapport à celle-ci, disposée à une distance donnée.

6. Système de distribution (12) selon l'une quelconque des revendications précédentes, **caractérisé en ce qu'**un moyen de surveillance ou moyen de mesure pour détecter la quantité d'épandage est associé à l'élément de commutation et/ou à la buse de distribution (36) et/ou à la buse de pulvérisation (38).

7. Système de distribution (12) selon l'une quelconque des revendications précédentes, **caractérisé en ce qu'**une variation de la modulation de largeur d'impulsion et/ou du degré de balayage se fait en fonction d'un guidage en hauteur de la rampe de pulvérisation (24) et/ou en fonction du niveau de pression dans le conduit de liquide.

8. Système de distribution (12) selon l'une quelconque des revendications précédentes, **caractérisé en ce que** la pression dans le conduit de liquide est régulée au moyen de la pompe (30) sur une valeur au moins largement constante.

9. Système de distribution (12) selon l'une quelconque des revendications précédentes, **caractérisé en ce que** le niveau de pression dans le conduit de liquide est supérieur ou égal à 0,5 bar et est inférieur ou égal à 10 bar, de préférence toutefois est compris entre 0,5 bar et 3 bar et en particulier va de 0,5 bar à 1 bar.

10. Système de distribution (12) selon l'une quelconque des revendications précédentes, **caractérisé en ce qu'**au moins une soupape de précontrainte (40) est associée au système de distribution (12).

11. Système de distribution (12) selon l'une quelconque des revendications précédentes, **caractérisé en ce que** la soupape de précontrainte (40) présente une pression de précontrainte ou une pression d'ouverture, qui est supérieure ou égale à 0 bar ou est supérieure ou égale à 0,2 bar et est inférieure ou égale à 5 bar, en particulier toutefois est de 0,5 bar.

12. Système de distribution (12) selon l'une quelconque des revendications précédentes, **caractérisé en ce que** l'au moins une buse de distribution (36) et l'au moins une buse de pulvérisation (38) sont reliées au moyen d'un élément de liaison.

13. Système de distribution (12) selon l'une quelconque des revendications précédentes, **caractérisé en ce que** l'élément de liaison est relié à un embranchement du conduit de liquide, et/ou que l'élément de liaison est relié au porte-buse, et/ou que l'élément de liaison est relié à une buse de pulvérisation (38) et/ou buse de distribution (36) montée sur le porte-buse.

14. Système de distribution (12) selon l'une quelconque des revendications précédentes, **caractérisé en ce que** l'au moins une buse de distribution (36) et l'au moins une buse de pulvérisation (38) sont en communication fluidique.

15. Système de distribution (12) selon l'une quelconque des revendications précédentes, **caractérisé en ce que** la rampe de pulvérisation (24) présente au moins deux largeurs partielles, lesquelles largeurs partielles peuvent épandre des liquides de pulvérisation indépendamment les unes des autres, dans lequel au moins une buse de distribution (36) avec un élément de commutation actionné avec une modulation de largeur d'impulsion est associée à chaque largeur partielle ainsi qu'au moins une buse de pulvérisation (38) est associée à chaque largeur partielle.

16. Système de distribution (12) selon l'une quelconque des revendications précédentes, **caractérisé en ce que** la buse de distribution (36) et la buse de pulvérisation (38) sont installées à une distance minimale l'une par rapport à l'autre de 10 cm, en particulier toutefois sont installées à une distance de 25 cm et/ou de 50 cm et/ou de 100 cm l'une par rapport à l'autre.

17. Système de distribution (12) selon l'une quelconque des revendications précédentes, **caractérisé en ce que** la buse de pulvérisation (38) présente une surface de section transversale D2 pouvant être modifiée et/ou que la buse de distribution (36) présente une surface de section transversale D1 pouvant être modifiée.

18. Système de distribution (12) selon l'une quelconque des revendications précédentes, **caractérisé en ce que** la surface de section transversale D2 varie sur la base de la surface de section transversale D1 et de la modulation de largeur d'impulsion de la buse de distribution (36).

19. Système de distribution (12) selon l'une quelconque des revendications précédentes, **caractérisé en ce que** la surface de section transversale D1 de la buse de distribution (36) est supérieure ou égale à la surface de section transversale D2 de la buse de pulvérisation (38).

20. Système de distribution (12) selon l'une quelconque des revendications précédentes, **caractérisé en ce que** la surface de section transversale D1 et la surface de section transversale D2 sont définies de telle manière que la buse de pulvérisation (38) et la buse de distribution (36) permettent d'épandre la quantité au moins approximativement égale de liquide de pulvérisation.

21. Procédé d'épandage de liquides de pulvérisation destiné à être utilisé dans un pulvérisateur (10) agricole, présentant les étapes :
- de fourniture du liquide de pulvérisation respectif au moyen d'au moins un réservoir (16),
- de refoulement du liquide de pulvérisation et d'alimentation en liquide de pulvérisation de buses de pulvérisation (38) et de buses de distribution (36) installées sur une rampe de pulvérisation (24), au moyen d'une pompe (30) avec une pression pouvant être modifiée de manière variable et/ou régulée sur une valeur constante depuis le réservoir (16) le long d'un conduit de liquide guidé sur une rampe de pulvérisation (24) montée sur le pulvérisateur (10),
- d'atomisation du liquide de pulvérisation au moyen d'au moins une buse de distribution (36), laquelle est pilotée avec un élément de commutation actionné avec une modulation de largeur d'impulsion et au moyen d'au moins une buse de pulvérisation (38) disposée à distance par rapport à la buse de distribution (36),
- de variation de la modulation de largeur d'impulsion de la buse de distribution (36) en fonction du débit de liquide de pulvérisation de la buse de pulvérisation (38).

22. Procédé selon la revendication 21, **caractérisé en ce que** la buse de pulvérisation (38) n'est pas pilotée directement avec un élément de commutation actionné avec une modulation de largeur d'impulsion.

23. Procédé selon la revendication 21 ou 22, **caractérisé en ce qu'**une augmentation de la quantité d'épandage de la buse de distribution (36) se fait par une augmentation du degré de balayage, en particulier par une augmentation de la durée d'impulsion (t) et/ou par une augmentation de la surface de section transversale D1, et qu'une réduction de la quantité d'épandage de la buse de distribution (36) se fait par une réduction du degré de balayage, en particulier par une réduction de la durée d'impulsion (t) et/ou par une réduction de la surface de section transversale D1.

24. Procédé selon l'une quelconque des revendications 21 à 23, **caractérisé en ce qu'**un moyen de surveillance ou moyen de mesure pour détecter la quantité d'épandage est associé à l'élément de commutation et/ou à la buse de distribution (36) et/ou à la buse de pulvérisation (38).

25. Procédé selon l'une quelconque des revendications 21 à 24, **caractérisé en ce qu'**une variation de la modulation de largeur d'impulsion et/ou du degré de balayage se fait en fonction d'un guidage en hauteur de la rampe de pulvérisation (24) et/ou en fonction du niveau de pression dans le conduit de liquide.

26. Procédé selon l'une quelconque des revendications 21 à 25, **caractérisé en ce que** la buse de pulvérisation (38) présente une surface de section transversale D2 pouvant être modifiée et/ou que la buse de distribution (36) présente une surface de section transversale D1 pouvant être modifiée.

27. Procédé selon l'une quelconque des revendications 21 à 26, **caractérisé en ce que** la surface de section transversale D2 varie sur la base de la surface de section transversale D1 et de la modulation de largeur d'impulsion de la buse de distribution (36).
